# EUROPÄISCHE PATENTSCHRIFT

(11) **EP 3 956 400 B1**
(45) Veröffentlichungstag und Bekanntmachung des Hinweises auf die Patenterteilung: **28.06.2023**
(21) Anmeldenummer: 20716496.3
(22) Anmeldetag: 09.04.2020
(51) Int. Cl.: C08L 69/00

(54) **WÄRMELEITFÄHIGE POLYCARBONATE MIT VERBESSERTEM FLAMMSCHUTZ DURCH BARIUMSULFAT**
THERMALLY CONDUCTIVE POLYCARBONATES WITH IMPROVED FLAME PROTECTION BY MEANS OF BARIUM SULFATE
POLYCARBONATES CONDUCTEURS DE CHALEUR À PROTECTION CONTRE LES FLAMMES AMÉLIORÉE À L'AIDE DU SULFATE DE BARYUM

(30) Priorität: 18.04.2019 EP 19170116
(43) Veröffentlichungstag der Anmeldung: 23.02.2022
(73) Patentinhaber: Covestro Intellectual Property GmbH & Co. KG, 51373 Leverkusen (DE)
(72) Erfinder: SCHIRWITZ, Christopher, 51375 Leverkusen (DE); HUNGERLAND, Tim, 51061 Köln (DE); GRÜTER-REETZ, Tanja, 47829 Krefeld (DE); KRÜLLS, Helmut, 40668 Meerbusch (DE)
(74) Vertreter: Levpat
(86) Internationale Anmeldenummer: PCT/EP2020/060151
(87) Internationale Veröffentlichungsnummer: WO 2020/212245

(56) Entgegenhaltungen:
- WO-A1-2017/216678
- WO-A1-2018/037037

## Beschreibung

Die vorliegende Erfindung betrifft eine thermoplastische Zusammensetzung umfassend wenigstens ein aromatisches Polycarbonat, Talk, wenigstens ein anhydridmodifiziertes alpha-Olefin-Polymer, wenigstens ein organisches Flammschutzmittel ausgewählt aus: Fluoropolymere enthaltende Antitropfmittel, fluorierte Sulfonsäuresalze, organische Phosphorsäureester, Phosphazene oder Mischungen aus wenigstens zwei der vorgenannten Mittel und Bariumsulfat. Die Erfindung betrifft weiterhin ein Herstellungsverfahren für eine solche Zusammensetzung und einen aus dieser Zusammensetzung herstellbaren Formkörper.

Die Verstärkung von Polycarbonaten durch den Füllstoff Talk ist auf Grund der Wärmeleitfähigkeit von Talk für viele Anwendungen wünschenswert, insbesondere dann, wenn das Vorliegen elektrischer Leitfähigkeit nicht gewünscht ist. Die Zugabe von Talk zu aufgeschmolzenen Polycarbonaten kann jedoch zu einem Abbau der Polymerketten führen, was sich letztendlich in schlechteren mechanischen Eigenschaften der resultierenden Polycarbonat-Formkörper niederschlägt.

WO 2018/037037 A1 offenbart eine Zusammensetzung, erhalten durch Vermischen zumindest der Komponenten A) bis C), wobei A) Polycarbonat ist, B) unbeschlichteter Talk ist und C) mindestens ein anhydridmodifiziertes alpha-Olefin-Polymer mit einer Säurezahl von mindestens 30 mg KOH/g und einem mittleren Molekulargewicht Mw von 4.000 bis 40.000 g/mol ist, wobei die Mengen von B) und C) vor der Vermischung so aufeinander abgestimmt sind, dass pro 10 Gewichtsteile der Komponente B) 0,10 bis 1,4 Gewichtsteile der Komponente C) eingesetzt werden und wobei die Zusammensetzung frei von Polyestern und Pfropfpolymerisaten ist. Als anorganische Füllstoffe kommen laut dieser Veröffentlichung insbesondere Titandioxid, im allgemeinen in einer Menge von 0 bis 2,5 Gew.-%, bezogen auf die Summe der Gesamtzusammensetzung, oder Bariumsulfat in Betracht.

Die aus WO 2018/037037 A1 bekannten Zusammensetzungen weisen durch die Verwendung des Füllstoffs Talks eine verbesserte Wärmeleitfähigkeit auf. Das Polycarbonat wird durch die Verwendung einer auf die verwendete Talkum-Menge abgestimmten Menge eines speziellen Maleinsäureanhydridmodifizierten Olefin-Wachses so stabilisiert, dass ein basischer Polymer-Abbau weitgehend unterdrückt wird und gleichzeitig vorteilhafte mechanische Eigenschaften resultieren. Zum Beispiel werden eine gute Charpy-Schlagzähigkeit nach ISO179/1eU sowie eine gute multiaxiale Schlagzähigkeit gemäß DIN EN ISO 6603-2:2002 erzielt. Aus Sicht einer weiter zu steigernden Flammbeständigkeit ist die Zugabe solcher Olefin-Wachse allerdings nachteilig.

WO 2017/216678 A1 beschäftigt sich mit der Wärmeleitfähigkeit von Polycarbonatzusammensetzungen und offenbart Zusammensetzungen, die neben Polycarbonat auch Talk, maleinsäureanhydridmodifiziertes EPDM, Titandioxidpigment und T-SAN enthalten.

Die vorliegende Erfindung hat sich die Aufgabe gestellt, wärmeleitfähige Polycarbonat-Zusammensetzungen mit einem verbesserten Flammschutz bereitzustellen. Insbesondere hat sie sich die Aufgabe gestellt, beispielsweise gemäß WO 2018/037037 A1 vorliegende Zusammensetzungen derart weiterzuentwickeln, dass sie in Anwendungen nutzbar sind, die besondere Anforderungen an den Flammschutz haben. Solche Anwendungen können Komponenten von elektrischen Bauteilen oder Gehäuse für elektrische Bauteile sein.

Das Anforderungsprofil kann beinhalten, dass die Formmassen eine UL94V-Bewertung von V0 bei maximal 1,5 mm Wandstärke und eine UL5V-Bewertung von 5VA bei maximal 2,0 mm Wandstärke aufweisen. Vorteilhaft ist es, die aus WO 2018/037037 A1 bekannte gute Wärmeformbeständigkeit der thermoplastischen Zusammensetzungen durch die Art und Menge an Flammschutzmittel nicht zu weit abzusenken. Es könnte beispielsweise eine Vicat-Temperatur (Vicat B, ISO 306:2014-3, Aufheizrate 50 K/h) von 115 °C oder mehr erhalten bleiben, was insbesondere für die Verwendung der Formmassen als Komponenten von elektrischen Bauteilen oder als Gehäuse für elektrische Bauteile von Vorteil ist.

Erfindungsgemäß gelöst wird die Aufgabe durch eine Zusammensetzung gemäß Anspruch 1. Die Erfindung betrifft weiterhin ein Herstellungsverfahren gemäß Anspruch 11 und ein Formteil gemäß Anspruch 13. Vorteilhafte Weiterbildungen sind in den Unteransprüchen angegeben. Sie können beliebig kombiniert werden, sofern sich aus dem Kontext nicht eindeutig das Gegenteil ergibt.

Eine erfindungsgemäße thermoplastische Zusammensetzung umfasst:
A) wenigstens ein aromatisches Polycarbonat;
B) Talk;
C) wenigstens ein anhydridmodifiziertes alpha-Olefin-Polymer mit einer Säurezahl von ≥ 30 mg KOH/g und einem mittleren Molekulargewicht MW von ≥ 4000 bis ≤ 40000 g/mol,
   wobei das mittlere Molekulargewicht MW bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005;
FR) wenigstens ein organisches Flammschutzmittel ausgewählt aus: Fluoropolymere enthaltenden Antitropfmitteln, fluorierten Sulfonsäuresalzen, organischen Phosphorsäureesten, Phosphazenen oder Mischungen aus wenigstens zwei der vorgenannten Mittel;
D) wenigstens eine von Talk verschiedene anorganische Verbindung.

Es ist ferner vorgesehen, dass die Zusammensetzung Bariumsulfat in einer Menge von ≥ 3 Gewichts-%, bezogen auf das Gesamtgewicht der Zusammensetzung, enthält; die Zusammensetzung von Bariumsulfat verschiedene Erdalkalimetallsulfate in einer Menge von ≥ 0 Gewichts-% bis ≤ 25 Gewichts-%, bezogen auf das Gesamtgewicht der in der Zusammensetzung vorliegenden Erdalkalimetallsulfate, enthält; die Zusammensetzung organische Phosphorsäureester in einer Menge von ≥ 0 Gewichts-% bis ≤ 7,5 Gewichts-%, bezogen auf das Gesamtgewicht der Zusammensetzung, enthält und die Zusammensetzung ≥ 0,5 Gewichts-%, bezogen auf das Gesamtgewicht der Zusammensetzung, an Fluoropolymeren enthaltenden Antitropfmitteln enthält. Für den Fall, dass die Zusammensetzung ≥ 0,1 Gewichts-%, bezogen auf das Gesamtgewicht der Zusammensetzung, an fluorierten Sulfonsäuresalzen enthält, beträgt der Gehalt an Fluropolymeren enthaltenden Antitropfmitteln ≥ 0,7 Gewichts-%, bezogen auf das Gesamtgewicht der Zusammensetzung.

Die Erfinder haben überraschenderweise gefunden, dass Bariumsulfat ab einer bestimmten Menge als Flammschutz-Synergist angesehen werden kann. Die bisherigen vorteilhaften Eigenschaften der Talkgefüllten Polycarbonatzusammensetzungen bleiben dabei in hohem Maße erhalten.

Vorzugsweise enthält die Zusammensetzung ≥ 4 Gewichts-% und weiter bevorzugt ≥ 5 Gewichts-% Bariumsulfat, jeweils bezogen auf das Gesamtgewicht der Zusammensetzung. Als Obergrenze für den Gehalt an Bariumsulfat sind beispielsweise ≤ 20 Gewichts-% oder ≤ 15 Gewichts-%, jeweils bezogen auf das Gesamtgewicht der Zusammensetzung möglich.

Aufgrund seiner höheren Reinheit ist das eingesetzte Bariumsulfat bevorzugt ein synthetisches Bariumsulfat, welches aus der Reaktion von Bariumcarbonat mit Schwefelsäure erhalten wird. Hierbei sind die "blanc fixe"-Qualitäten weiter bevorzugt. Der D50-Wert der Partikelgrößenverteilung (Sedimentationsanalyse) kann beispielsweise ≥7 bis ≤ 9 µm betragen.

Aus Gründen der Prozessvereinfachung ist es günstig, wenn die Zusammensetzung neben Bariumsulfat keine weiteren Erdalkalimetallsulfate enthält. Wenn weitere Erdalkalimetallsulfate wie Calciumsulfat hinzugefügt werden, soll ihr Anteil so bemessen sein, dass er ≥ 0 Gewichts-% bis ≤ 25 Gewichts-% (vorzugsweise ≥ 0 Gewichts-% bis ≤ 15 Gewichts-%, weiter bevorzugt ≥ 0 Gewichts-% bis ≤ 5 Gewichts- %), bezogen auf das Gesamtgewicht der in der Zusammensetzung vorliegenden Erdalkalimetallsulfate, beträgt.

Die Zusammensetzung enthält organische Phosphorsäureester in einer Menge von ≥ 0 Gewichts-% bis ≤ 7,5 Gewichts-%, vorzugsweise von ≥ 0 Gewichts-% bis ≤ 5 Gewichts-%, bezogen auf das Gesamtgewicht der Zusammensetzung. Bei den Phosphorsäureestern kann es sich um Flammschutzmittel wie BDP (Bisphenol A-bis-diphenylphosphat und dessen Oligomere) oder um Stabilisatoren wie Mono-, Di- und Trihexylphosphat, Triisoctylphosphat und Trinonylphosphat handeln.

Weiterhin enthält die Zusammensetzung ≥ 0,5 Gewichts-%, bezogen auf das Gesamtgewicht der Zusammensetzung, an Fluoropolymeren enthaltenden Antitropfmitteln (Antidrippingmitteln). Hierbei kann es sich beispielsweise um PTFE oder, bevorzugt, um Blends von PFTE mit SAN-Polymeren handeln. Der Gehalt an PTFE im SAN-Polymer liegt beispielsweise im Bereich von 45 bis 55 Gewichts- %, bezogen auf das Gesamtgewicht des Antitropfmittels.

Für den Fall, dass die Zusammensetzung ≥ 0,1 Gewichts-%, vorzugsweise ≥ 0,2 Gewichts-%, bezogen auf das Gesamtgewicht der Zusammensetzung, an fluorierten Sulfonsäuresalzen enthält, beträgt der Gehalt an Fluropolymeren enthaltenden Antitropfmitteln ≥ 0,7 Gewichts-%, vorzugsweise ≥ 0,8 Gewichts-%, bezogen auf das Gesamtgewicht der Zusammensetzung. Ein Beispiel für solch ein fluoriertes Sulfonsäuresalz ist Kaliumperfluorobutansulfonat ("C4-Salz").

### Komponente A

Bei Komponente A handelt es sich um mindestens ein aromatisches Polycarbonat. Als Komponente A können somit auch Mischungen eingesetzt werden. Polycarbonate im Sinne der vorliegenden Erfindung sind sowohl Homopolycarbonate als auch Copolycarbonate; die Polycarbonate können in bekannter Weise linear oder verzweigt sein. Die Herstellung der Polycarbonate erfolgt in bekannter Weise aus Dihydroxyarylverbindungen, Kohlensäurederivaten, gegebenenfalls Kettenabbrechern und Verzweigern.

Bevorzugte Dihydroxyarylverbindungen sind ausgewählt aus mindestens einem aus der Gruppe 4,4'-Dihydroxybiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, und 1,1-Bis-(4-hydroxyphenyl)-3,3,5-trimethylcyclohexan.

Geeignete Kohlensäurederivate sind beispielsweise Phosgen oder Diphenylcarbonat. Geeignete Kettenabbrecher, die bei der Herstellung der erfindungsgemäß verwendeten Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen. Geeignete Verzweiger sind die in der Polycarbonatchemie bekannten tri- oder mehr als trifunktionellen Verbindungen, insbesondere solche mit drei oder mehr als drei phenolischen OH-Gruppen.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan sowie Copolycarbonate auf Basis der Monomere Bisphenol A und 1,1-Bis-(4-hydroxyphenyl)-3,3,5-trimethylcyclohexan, Bisphenol A mit 4,4'-Dihydroxybiphenyl (DOD) oder Bisphenol A mit 4,4'-Dihydroxy-3,3',5,5'-tetra(tert.-Butyl)biphenyl. Bei den Copolycarbonaten kann der Anteil des Co-Monomers wie DOD beispielsweise 11 mol% bis 34 mol% und insbesondere 26 mol% bis 32 mol% betragen.

### Komponente B

Talk im Sinne der vorliegenden Erfindung ist bevorzugt ein Talk, welcher im Wesentlichen die gleiche chemische Zusammensetzung, Partikeldurchmesser, Porosität und/oder BET-Oberfläche aufweist, oder ein Talkgemisch.

Bei Talk handelt es sich im Allgemeinen um ein Schichtsilikat. Es kann beschrieben werden als Magnesiumsilikathydrat mit der allgemeinen chemischen Zusammensetzung Mg₃[Si₄O₁₀(OH)₂]. Unterschiedliche Talkarten enthalten jedoch unterschiedliche Verunreinigungen, so dass Abweichungen von dieser allgemeinen Zusammensetzung vorliegen können.

Der eingesetzte Talk oder das Talkgemisch zur Herstellung der erfindungsgemäßen Zusammensetzung ist vorzugsweise unbeschlichtet. Im Sinne der vorliegenden Erfindung wird eine Schlichte als eine gezielte (chemi- oder physisorbierte) Anreicherung von Molekülen an der Oberfläche betrachtet. Bei unbeschlichtetem Talk handelt es sich somit um nicht oberflächen-behandelten Talk, d. h. nach der Gewinnung der Talkpartikel mit dem gewünschten Partikeldurchmesser und gegebenenfalls einer Kompaktierung wurde der Talk bevorzugt keinem weiteren Verfahrensschritt unterzogen, welcher die Oberfläche des Talks durch Chemisorption und/oder Physisorption gezielt verändert. Dies schließt jedoch nicht aus, dass unbeabsichtigt Verunreinigungen, Staub oder ähnliche Partikel während der weiteren Handhabung des Talks an Teile der Oberfläche gelangen, solange die Oberfläche des Talks nicht wesentlich ihre Eigenschaften, insbesondere in Bezug auf den pH-Wert, verliert. In der Herstellung der erfindungsgemäßen Zusammensetzung wird der Talk erst durch die Vermischung mit der Komponente C beschlichtet.

Bevorzugt weist der Talk einen pH-Wert von 8 bis 10, besonders bevorzugt 8,5 bis 9,8, ganz besonders bevorzugt 9,0 bis 9,7 auf, wobei der pH-Wert bestimmt wird gemäß EN ISO 787-9: 1995. Es ist zu beachten, dass die EN ISO 787-9:1995 auch die Möglichkeit der Zugabe von Ethanol oder anderen organischen Lösungsmitteln zur Verbesserung der Dispergierung des zu vermessenden Feststoffes erwähnt. Bevorzugt wird erfindungsgemäß nur destilliertes Wasser zur Bestimmung des pH-Wertes gemäß EN ISO 787-9:1995 eingesetzt.

Die Komponente B) weist bevorzugt einen Gehalt an Eisen(II)oxid und/oder Eisen(III)oxid von 0,2 bis 2,5 Gew.-%, besonders bevorzugt 0,3 bis 2,3 Gew.-%, ganz besonders bevorzugt von 0,3 bis 2,0 Gew.-% auf. Dieser Gehalt wird bevorzugt gemessen durch Röntgenfluoreszenz oder Atomabsorptionsspektroskopie. Es hat sich herausgestellt, dass der Gehalt an Eisenoxid im Talk einen Einfluss auf den Grad des Abbau des Polycarbonats aufweist. Im erfindungsgemäß angegebenen Gehaltsbereich an Eisenoxid wurden besonders gute Ergebnisse in Bezug auf die Verminderung des Abbaus des Polycarbonats erzielt.

Ebenso bevorzugt weist die Komponente B) einen Gehalt an Aluminiumoxid von 0,01 bis 0,5 Gew.-%, besonders bevorzugt von 0,05 bis 0,48 Gew.-%, ganz besonders bevorzugt von 0,15 bis 0,45 Gew.-% auf.

Die Komponente B) weist bevorzugt einen mittleren Partikeldurchmesser D50 von 0,01 bis 10 µm, besonders bevorzugt 0,25 bis 10,00 µm, weiterhin bevorzugt 0,5 bis 10,00 µm auf, wobei der Partikeldurchmesser D50 bestimmt wird durch Sedimentationsanalyse. Unter dem Mittelwert D50 versteht der Fachmann einen mittleren Partikeldurchmesser, bei dem 50 % der Partikel kleiner sind als der definierte Wert. Bevorzugt wird der Partikeldurchmesser D50 bestimmt gemäß ISO 13317-3:2001.

Komponente B) weist bevorzugt eine BET-Oberfläche von 7,5 bis 20,0 m²/g, besonders bevorzugt von 9,0 bis 15,0 m²/g, ganz besonders bevorzugt 9,5 bis 14,0 m²/g auf. Die Bestimmung der Oberfläche nach Brunauer, Emmett und Teller mittels Gasadsorption ist dem Fachmann an sich bekannt. Bevorzugt wird die BET-Oberfläche gemäß ISO 4652:2012 bestimmt. Diese bevorzugte BET-Oberfläche wird besonders bevorzugt mit dem oben beschriebenen mittleren Partikeldurchmesser D50 des Talks verbunden. Es hat sich herausgestellt, dass bei einer solchen Kombination die erfindungsgemäß eingesetzte Komponente B optimal auf die erfindungsgemäß eingesetzte Komponente C abgestimmt ist. Durch die spezielle Säurezahl und Molmasse der Komponente C kann der Abbau des Polycarbonats, welcher durch die Komponente B verursacht wird, minimiert werden, da unter diesen Bedingungen insbesondere auch die Poren des Talks für das Wachs C zugänglich sind.

Besonders bevorzugt weist der Talk einen Talkgehalt von > 96 Gew.-%, besonders bevorzugt > 97 Gew.- %, ganz besonders bevorzugt > 98 Gew.-% auf.

Ebenso ist es bevorzugt, dass der Talk einen Glühverlust bei 1050 °C von 5,0 bis 7,0 Gew.-%, besonders bevorzugt von 5,2 bis 6,5 Gew.-% und ganz besonders bevorzugt von 5,3 bis 6,2 Gew.-% aufweist. Der Glühverlust wird bevorzugt mittels DIN51081:2002 bestimmt.

Der Talk oder das Talkgemisch gemäß Komponente B liegt bevorzugt kompaktiert vor.

### Komponente C

Die Komponente C im Sinne der vorliegenden Erfindung ist ein anhydridmodifiziertes alpha-Olefin-Polymer mit einer Säurezahl von mindestens 30 mg KOH/g und einem mittleren Molekulargewicht Mw (Gewichtsmittel) von 4000 bis 40000 g/mol. Dabei kann es sich auch um eine Mischung verschiedener Polymere handeln, welche zusammen die Merkmale gemäß Komponente C erfüllen.

Bevorzugtes Anhydrid als Baustein zur Modifizierung ist ein ungesättigtes Carbonsäureanhydrid, welches vorzugsweise ausgewählt ist aus mindestens einem, ausgewählt aus der Gruppe, bestehend aus Maleinsäureanhydrid, Phthalsäureanhydrid, Fumarsäureanhydrid, Itaconsäureanhydrid. Besonders bevorzugt ist Maleinsäureanhydrid.

Das anhydridmodifizierte alpha-Olefin-Polymer ist bevorzugt kautschukfrei.

Die Säurezahl des erfindungsgemäß eingesetzten Wachses der Komponente C beträgt mindestens 30 mg KOH/g. Bevorzugt beträgt die Säurezahl 30 bis 110 mg KOH/g, besonders bevorzugt 40 bis 95 mg KOH/g. Die Säurezahl wird mittels potentiometrischer Titration mit alkoholischer Kaliumhydroxid-Lösung gemäß DIN ISO 17025:2005 bestimmt.

Das mittlere Molekulargewicht M_{w} des anhydridmodifzierten alpha-Olefin-Polymers beträgt 4000 bis 40000 g/mol, bevorzugt 4000 bis 32000 g/mol, besonders bevorzugt 4800 bis 25000 g/mol. Das Molekulargewicht Mw wird bestimmt mittels Gelpermeationschromatographie in ortho-Dichlorbenzol bei 150 °C mit Polystyrolkalibrierung. Hierbei ist der angegebene Wert bevorzugt der Mittelwert aus einer Doppelbestimmung.

Bevorzugt beträgt bei kleineren Molekulargewichten von 4000 bis 10000 g/mol die Säurezahl 30 bis 65 mg KOH/g, besonders bevorzugt 40 bis 60 mg KOH/g. Besonders bevorzugt beträgt das Molekulargewicht für die jeweils genannten Säurezahl von 30 mg bis 65 mg bzw. 40 bis 60 mg KOH/g 4500 bis 8000 g/mol und insbesondere 5000 bis 7000 g/mol.

Bevorzugt beträgt bei größeren Molekulargewichten von 12000 bis 40000 g/mol die Säurezahl 30 mg bis 100 mg KOH/g, insbesondere 35 mg bis 95 mg KOH/g. Besonders bevorzugt beträgt das Molekulargewicht für die jeweils genannten Säurezahl von 30 mg bis 100 mg bzw. 35 bis 95 mg KOH/g 12000 bis 32000 g/mol und insbesondere 15000 bis 25000 g/mol, ganz besonders bevorzugt 17500 bis 23000 g/mol.

Die Kombination der (Mindest)Säurezahl und Molmasse des Wachses C wie oben angegeben ist geeignet, um insbesondere die multiaxiale Schlagzähigkeit von aus den erfindungsgemäßen Zusammensetzungen hergestellten Formteilen zu optimieren.

Die Menge der Komponente C ergibt sich aus den oben angegebenen Mengen pro 10 Gewichtsteile Komponente B. In der erfindungsgemäßen Zusammensetzung sind die eingesetzten Mengen von B und C vorzugsweise so aufeinander abgestimmt, dass pro 10 Gewichtsteile der Komponente B 0,10 bis 1,4 Gewichtsteile der Komponente C eingesetzt werden. Bevorzugt werden pro 10 Gewichtsteile der Komponente B 0,2 bis 1,2, besonders bevorzugt 0,3 bis 1,1 Gewichtsteile der Komponente C, ganz besonders bevorzugt 0,4 bis 1,0 Gewichtsteile der Komponente C, äußerst bevorzugt 0,6 bis 0,8 Gewichtsteile der Komponente C eingesetzt.

### Komponente FR

In die Komponente FR werden organische Antitropfmittel und das Brandverhalten modifizierende organische Verbindungen gruppiert. Neben den vorstehend bereits erwähnten Antitropfmitteln, fluorierten Sulfonsäuresalzen und organischen Phosphorsäureestern beinhaltet die Definition dieser Komponente auch Phosphazene.

Unter den cyclischen erfindungsgemäß einzusetzenden Phosphazenen werden bevorzugt solche eingesetzt, bei denen 3 bis 5 Struktureinheiten umfassend die Gruppe P=N im Ring vorliegen. Von den kettenförmigen erfindungsgemäß einzusetzenden Phosphazenen werden bevorzugt solche eingesetzt, bei denen 3 bis 25 Struktureinheiten umfassend die Gruppe P=N in der Molekülkette vorliegen.

Insbesondere ganz besonders bevorzugt werden ringförmige Phenoxyphosphazene eingesetzt, wie sie z.B. von der Fa. Fushimi Pharmaceutical Co. Ltd, Kagawa, Japan unter der Bezeichnung Rabitle^{®} FP110 [CAS-Nr. 1203646-63-2] erhältlich sind, oder Hexaphenoxycyclotriphosphazen [2,2,4,4,6,6-Hexahydro-2,2,4,4,6,6-hexaphenoxytriazatriphosphorine CAS Nr. 1184-10-7].

Die erfindungsgemäße Zusammensetzung kann weiterhin übliche Additive wie Thermostabilisatoren, Entformungsmittel, Antioxidantien, UV-Absorber, IR-Absorber, Antistatik, optische Aufheller, Lichtstreumittel und Farbmittel (einschließlich anderer Weißpigmente als Titandioxid, das bereits als Komponente E erfasst ist) enthalten.

Gemäß einer Ausführungsform enthält die Zusammensetzung ≥ 3 Gewichts-%, bezogen auf das Gesamtgewicht der Zusammensetzung, an organischen Phosphorsäureestern. Vorzugsweise beträgt dieser Gehalt ≥ 4 Gewichts-% bis ≤ 6 Gewichts-%, weiter bevorzugt ≥ 4,5 Gewichts-% bis ≤ 5 Gewichts-%. Beispiele zu den Phosphorsäureestern wurden bereits vorstehend beschrieben. Besonders bevorzugt gemäß dieser Ausführungsform ist ein Gehalt von ≥ 4,5 Gewichts-% bis ≤ 5 Gewichts-% an BDP.

Gemäß einer weiteren Ausführungsform enthält die Zusammensetzung ≥ 3 Gewichts-%, bezogen auf das Gesamtgewicht der Zusammensetzung, an linearen und/oder cyclischen Phosphazenen. Vorzugsweise beträgt dieser Gehalt ≥ 4 Gewichts-% bis ≤ 10 Gewichts-%, weiter bevorzugt ≥ 5 Gewichts-% bis ≤ 8 Gewichts-%. Beispiele zu den Phosphazenen wurden bereits vorstehend beschrieben. Besonders bevorzugt gemäß dieser Ausführungsform ist ein Gehalt von ≥ 5 Gewichts-% bis ≤ 7,5 Gewichts-% an Phenoxycyclophosphazen.

Gemäß einer weiteren Ausführungsform enthält die Zusammensetzung ≥ 0 Gewichts-% bis ≤ 1 Gewichts- %, vorzugsweise ≤ 0,1 Gewichts-%, bezogen auf das Gesamtgewicht der Zusammensetzung, an oligomeren organischen Siloxanen und/oder ≥ 0 Gewichts-% bis ≤ 1 Gewichts-%, vorzugsweise ≤ 0,1 Gewichts-%, bezogen auf das Gesamtgewicht der Zusammensetzung, an halogenfreien organischen Sulfonen und/oder halogenfreien organischen Sulfonaten und/oder ≥ 0 Gewichts-% bis ≤ 1 Gewichts-%, vorzugsweise ≤ 0,1 Gewichts-%, bezogen auf das Gesamtgewicht der Zusammensetzung, an Bornitrid. Besonders bevorzugt ist die Abwesenheit der vorgenannten Substanzen in der Zusammensetzung. Beispiele für die Siloxane sind aromatische Tetrasiloxane wie Octaphenyltetrasiloxan. Ein Beispiel für die Sulfone und Sulfonate ist das sogenannte KSS-Salz, eine Mischung aus Diphenylsulfon, Kalium-diphenylsulfon-sulfonat und Kalium-diphenylsulfon-disulfonat.

Gemäß einer weiteren Ausführungsform enthält die Zusammensetzung wenigstens ein Polycarbonat oder Co-Polycarbonat umfassend auf Bisphenol A basierende Einheiten. Wie bereits zuvor ausgeführt sind besonders bevorzugte Polycarbonate das Homopolycarbonat auf Basis von Bisphenol A sowie Copolycarbonate auf Basis der Monomere Bisphenol A und 1,1-Bis-(4-hydroxyphenyl)-3,3,5-trimethylcyclohexan oder Bisphenol A mit 4,4'-Dihydroxydiphenyl (DOD).

Gemäß einer weiteren Ausführungsform umfasst das anhydridmodifizierte alpha-Olefin-Polymer C) ≥ 90,0 bis ≤ 98,0 Gewichts-% alpha-Olefin-Polymer und ≥ 2,0 bis ≤ 10,0 Gewichts-% Anhydrid, wobei die Gewichts-%-Angaben sich auf das Gesamtgewicht des anhydridmodifizierten alpha-Olefin-Polymers beziehen und ihre Summe ≤ 100 Gewichts-% beträgt. Bevorzugt umfasst das alpha-Olefin-Polymer:
i) 92,0-97,5 Gew.-%, besonders bevorzugt 94,0-97,0 Gew.-% alpha-Olefin-Polymer und
ii) 2,5-8,0 Gew.-%, und besonders bevorzugt 3,0-6,0 Gew.-% Anhydrid.

Der olefinische Teil i) des alpha-Olefin-Polymers ist bevorzugt dadurch gekennzeichnet, dass
der Ethylenanteil 80,0-96,0 Gew.-%, bevorzugt 84,0-92,0 Gew.-%,
der Propylenanteil 2,0-10,0 Gew.-%, bevorzugt 4,0-8,0 Gew.-% und
der Octenanteil 2,0-10,0 Gew.-%, bevorzugt 4,0-8,0 Gew.-%, ist.

Ebenso bevorzugt besteht der olefinische Teil i) des alpha-Olefin-Polymers aus Propylen und/oder Ethylen. Weiterhin bevorzugt besteht der olefinische Teil i) des alpha-Olefin-Polymers aus Propylen.

Gemäß einer weiteren Ausführungsform weist der Talk einen D50-Wert der Partikelgrößenverteilung, bestimmt mittels Sedimentationsanalyse (ISO13317-3:2001), von ≥ 0,5 bis ≤ 10 µm auf. Vorzugsweise beträgt dieser Wert ≥ 0,6 bis ≤ 2,5 µm.

Gemäß einer weiteren Ausführungsform umfasst die Zusammensetzung:
A) ≥ 50 bis ≤ 75 Gewichts-% aromatisches Polycarbonat;
B) ≥ 15 bis ≤ 35 Gewichts-% Talk;
C) ≥ 0,5 bis ≤ 3 Gewichts-% anhydridmodifiziertes alpha-Olefin-Polymer mit einer Säurezahl von ≥ 30 mg KOH/g und einem mittleren Molekulargewicht Mw von ≥ 4000 bis ≤ 40000 g/mol,
   wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005;
FR) ≥ 0,7 bis ≤ 0,9 Gewichts-% Fluoropolymer enthaltendes Antitropfmittel in Kombination mit ≥ 0,1 bis ≤ 0,3 Gewichts-% fluoriertem Sulfonsäuresalz; oder ≥ 0,4 bis ≤ 0,6 Gewichts-% Fluoropolymer enthaltendes Antitropfmittel in Kombination mit ≥ 3 bis ≤ 5 Gewichts-% organischem Phosphorsäureester; oder ≥ 0,4 bis ≤ 0,6 Gewichts-% Fluoropolymer enthaltendes Antitropfmittel in Kombination mit ≥ 3 bis ≤ 10 Gewichts-% linearem oder cyclischem Phosphazen;
D) ≥ 3 Gewichts-% bis ≤ 10 Gewichts-% Bariumsulfat;
E) ≥ 0 Gewichts-% bis ≤ 3 Gewichts-% Titandioxid;
wobei die Gewichts-%-Angaben sich auf das Gesamtgewicht der Zusammensetzung beziehen und ihre Summe ≤ 100 Gewichts-% beträgt.

Vorzugsweise umfasst die Zusammensetzung:
A) ≥ 52 bis ≤ 70 Gewichts-% aromatisches Polycarbonat;
B) ≥ 25 bis ≤ 30 Gewichts-% Talk;
C) ≥ 1 bis ≤ 2 Gewichts-% anhydridmodifiziertes alpha-Olefin-Polymer mit einer Säurezahl von ≥ 30 mg KOH/g und einem mittleren Molekulargewicht Mw von ≥ 4000 bis ≤ 40000 g/mol,
   wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005;
FR) ≥ 0,7 bis ≤ 0,9 Gewichts-% Fluoropolymer enthaltendes Antitropfmittel in Kombination mit ≥ 0,1 bis ≤ 0,3 Gewichts-% fluoriertem Sulfonsäuresalz; oder ≥ 0,4 bis ≤ 0,6 Gewichts-% Fluoropolymer enthaltendes Antitropfmittel in Kombination mit ≥ 4 bis ≤ 5 Gewichts-% organischem Phosphorsäureester; oder ≥ 0,4 bis ≤ 0,6 Gewichts-% Fluoropolymer enthaltendes Antitropfmittel in Kombination mit ≥ 4 bis ≤ 8 Gewichts-% linearem oder cyclischem Phosphazen;
D) ≥ 5 Gewichts-% bis ≤ 8 Gewichts-% Bariumsulfat;
E) ≥ 0 Gewichts-% bis ≤ 1,5 Gewichts-% Titandioxid,
wobei die Gewichts-%-Angaben sich auf das Gesamtgewicht der Zusammensetzung beziehen und ihre Summe ≤ 100 Gewichts-% beträgt.

Gemäß einer weiteren Ausführungsform umfasst die Zusammensetzung:
A) ≥ 52 bis ≤ 55 Gewichts-% aromatisches Polycarbonat mit einem mittleren Molekulargewicht Mw von 23.000 g/mol bis 25.000, einer Erweichungstemperatur (VST/B 120 nach ISO 306:2014-3) von 145 °C bis 150 °C und einer Schmelze-Volumenfließrate (MVR) nach ISO 1133:2012-03 von 18,0 cm³/(10 min) bis 20,0 cm³/(10 min) bei 300 °C und 1,2 kg Belastung;
B) ≥ 28 bis ≤ 30 Gewichts-% Talk mit einem D50-Wert der Partikelgrößenverteilung (Sedimentationsanalyse) von ≥ 2 µm bis ≤ 2,5 µm;
C) ≥ 1 bis ≤ 2 Gewichts-% anhydridmodifiziertes alpha-Olefin-Polymer mit einer Säurezahl von ≥ 75 bis ≤80 mg KOH/g und einem mittleren Molekulargewicht Mw von ≥ 20,000 bis ≤ 21,000 g/mol,
   wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005;
FR) ≥ 0,4 bis ≤ 0,6 Gewichts-% Fluoropolymer enthaltendes Antitropfmittel und ≥ 5 bis ≤ 8 Gewichts-% cyclisches Phosphazen;
D) ≥ 7 Gewichts-% bis ≤ 8 Gewichts-% Bariumsulfat;
E) ≥ 0 Gewichts-% bis ≤ 1,2 Gewichts-% Titandioxid,
wobei die Gewichts-%-Angaben sich auf das Gesamtgewicht der Zusammensetzung beziehen und ihre Summe ≤ 100 Gewichts-% beträgt.

Gemäß einer weiteren Ausführungsform weist die Zusammensetzung wenigstens zwei der folgenden Eigenschaften auf:
a) die Schmelzeviskosität (ISO 11443:2014-04, 300 °C, 1000 s⁻¹) beträgt ≥ 100 Pa s bis ≤ 300 Pa s (vorzugsweise ≥ 120 Pa s bis ≤ 270 Pa s);
b) die Charpy-Schlagzähigkeit (ungekerbt, ISO 179/1eU, 23 °C) beträgt ≥ 20 kJ/m² (vorzugsweise ≥ 20 kJ/m² bis ≤ 150 kJ/m²);
c) die Vicat B-Erweichungstemperatur (ISO 306, 50 K/h, 50 N) beträgt ≥ 115 °C (vorzugsweise ≥ 115 °C bis ≤ 150 °C);
d) die Wärmeleitfähigkeit (ASTM E 1461, in plane) beträgt ≥ 0,68 W/m K (vorzugsweise ≥ 0,7 W/m K bis ≤ 1,5 W/m K);
e) die Wärmeleitfähigkeit (ASTM E 1461, through plane) beträgt ≥ 0,2 W/m K (vorzugsweise ≥ 0,24 W/m K bis ≤ 0,4 W/m K);
f) die Einstufung im Brandtest UL94V (1,5 mm Wandstärke) beträgt V-0;
g) die Einstufung im Brandtest UL94-5V (2,0 mm Wandstärke) beträgt VA.

In einer bevorzugten Variante weist die Zusammensetzung die Eigenschaft f) und wenigstens eine weitere Eigenschaft ausgewählt aus a) bis e) und g) auf.

In einer bevorzugten Variante weist die Zusammensetzung die Eigenschaft g) und wenigstens eine weitere Eigenschaft ausgewählt aus a) bis f) auf.

Ein weiterer Gesichtspunkt der vorliegenden Erfindung ist ein Verfahren zur Herstellung einer erfindungsgemäßen Zusammensetzung, umfassend das Vermischen der Komponenten A), B) C), FR) und D), wobei als Talk B) unbeschlichteter Talk eingesetzt wird, die Mengen von B) und C) vor dem Vermischen so aufeinander abgestimmt sind, dass pro 10 Gewichtsteile unbeschlichtetem Talk ≥ 0,10 bis ≤ 1,4 Gewichtsteile der Komponente C eingesetzt werden, wobei das Vermischen der Komponenten A), B), FR) und D) einen Mischschritt der Komponenten A) und B) bei einer Temperatur oberhalb der Schmelztemperatur des aromatischen Polycarbonats A) umfasst und wobei Komponente C) der Mischung hinzugegeben wird, wenn die Komponenten A) und B) zusammen aufgeschmolzen werden.

Gemäß einer Ausführungsform erfolgt das Vermischen in einem Ko-Kneter.

Die Erfindung betrifft ebenfalls ein Formteil, umfassend eine thermoplastisch verarbeitete erfindungsgemäße Zusammensetzung. Das Formteil kann aus der erfindungsgemäßen Zusammensetzung bestehen oder aber einen Teilbereich, etwa aufgrund von Mehrkomponentenspritzguss, aus der Zusammensetzung umfassen. Die erfindungsgemäßen Formteile zeichnen sich durch eine einzigartige Eigenschaftskombination intrinsischer Wärmeleitfähigkeit bei elektrischer Isolation, hoher Steifigkeit, hoher Zähigkeit, insbesondere bei multiaxialer Beanspruchung, verbesserter Fließfähigkeit und hoher Oberflächenqualität bei thermoplastischer Verarbeitung aus.

Die Formteile aus den erfindungsgemäßen Zusammensetzungen sind jeweils thermisch leitfähig und bevorzugt elektrisch isolierend.

Die Formteile sind außerdem für folgende Anwendungen geeignet: Fahrzeugteile oder Innenausbauteile für Kraftfahrzeuge, Busse, Lastwagen, Wohnmobile, Schienenfahrzeuge, Luftfahrzeuge, Wasserfahrzeuge oder sonstige Fahrzeuge, Bauteile für elektrisch motorisierte Fahrzeuge, Abdeckplatten für den Bausektor, flächige Wandelemente, Trennwände, Wandschutz- und Kantenschutzleisten, Profile für Elektroinstallationskanäle, Kabelleiter oder Stromschienenabdeckungen.

Gemäß einer Ausführungsform ist das Formteil ein Batteriegehäuse, ein 2-Komponenten-Kühlkörper mit einer elektrisch leitfähigen Schicht oder ein Elektronikgehäuse.

### Beispiele

Die vorliegende Erfindung wird anhand der nachfolgenden Beispiele näher erläutert, ohne jedoch darauf beschränkt zu sein. Sofern nicht anders angegeben, sind alle Prozentangaben in den Formulierungen Gewichts-Prozent, bezogen auf das Gesamtgewicht der Formulierung. Ein "V" in der Formulierungsbezeichnung bedeutet, dass die Formulierung ein Vergleichsbeispiel ist. Der eingesetzte Talk B1 und B2 war vor seiner Verarbeitung zu den Polycarbonat-Zusammensetzungen unbeschlichtet.

### Eingesetzte Komponenten

| | |
|---|---|
| **A1** | Lineares Bisphenol-A-Polycarbonat mit einem mittleren Molekulargewicht M_{w} von ca. 24.000 g/mol der Covestro Deutschland AG und einer Erweichungstemperatur (VST/B 120 nach ISO 306:2014-3) von 148°C, welches keinen UV-Absorber enthält. Die Schmelze-Volumenfließrate (MVR) nach ISO 1133:2012-03 beträgt 19,0 cm³/(10 min) bei 300 °C und 1,2 kg Belastung |
| **A2** | Lineares Bisphenol-A-Polycarbonat mit einem mittleren Molekulargewicht M_{w} von ca. 31.000 g/mol der Covestro Deutschland AG und einer Erweichungstemperatur (VST/B 120 nach ISO 306:2014-3) von 150°C, welches keinen UV-Absorber enthält. Die Schmelze-Volumenfließrate (MVR) nach ISO 1133:2012-03 beträgt 6,0 cm³/(10 min) bei 300 °C und 1,2 kg Belastung |
| **A3** | Lineares Co-Polycarbonat aus Bisphenol-A und 4,4'-Dihydroxybiphenyl (DOD) mit einem mittleren Molekulargewicht M_{w} von ca. 23.000 g/mol und einer Erweichungstemperatur (VST/B 120 nach ISO 306:2014-3) von 156°C, welches keinen UV-Absorber enthält. Die Schmelze-Volumenfließrate (MVR) nach ISO 1133:2012-03 beträgt 8,5 cm³/(10 min) bei 300 °C und 1,2 kg Belastung |
| **C** | Propylen-Maleinsäureanhydrid-Polymer mit einem mittleren Molekulargewicht (Gelpermeationschromatographie in ortho-Dichlorbenzol bei 150 °C mit Polystyrolkalibrierung) M_{w} = 20700 g/mol, Mₙ = 1460 g/mol, Säurezahl 78 mg KOH/g |
| **B1** | Kompaktierter Talk mit einem Talkgehalt von 98 Gew.-%, einem Fe-Oxid-Gehalt von 1,9 Gew.- %, einem Al-Oxid-Gehalt von 0,2 Gew.-%, Glühverlust (DIN 51081/1000 °C) von 5,4 Gew.-%, pH-Wert (nach EN ISO 787-9:1995) von 9,15, D50 (Sedimentationsanalyse) von 2,2 µm; BET-Oberfläche nach ISO 4652:2012) 10 m²/g |
| **B2** | Kompaktierter Talk mit einem Talkgehalt von 99 Gew.-%, einem Fe-Oxid-Gehalt von 0,4 Gew.- %, einem Fe-Oxid-Gehalt von 0,4 Gew.-%, Glühverlust von 6,0 Gew.-%, pH-Wert (nach EN ISO 787-9:1995) von 9,55, D50 (Sedimentationsanalyse) von 0,65 µm; BET-Oberfläche 13,5 m²/g |
| **FR1** | Antitropfmittel aus ca. 50% PTFE-Pulver (Polytetrafluorethylen), CAS-Nr. 9002-84-0, verkapselt mit 50% SAN (Acrylnitril-Styrol-Copolymer, CAS-Nr. 9003-54-7), erhältlich als POLYB^{®} FS-200 der Han Nanotech Co., Ltd. |
| **FR2** | C4-Salz (Kaliumperfluorobutansulfonat), CAS-Nr. 29420-49-3, erhältlich als Bayowet^{®} C4 der Lanxess AG |
| **FR3** | KSS-Salz (Mischung aus Kalium-3-(phenylsulfonyl), CAS-Nr. 63316-43-8, und Dikalium-3,3'-sulfonylbis(benzolsulfonat), CAS-Nr. 63316-33-6), erhältlich als Potassium Diphenylsulfone 3 von der Firma OQEMA GmbH |
| **FR4** | OPCTS (Octaphenyltetrasiloxan), CAS-Nr. 546-56-5, erhältlich als SR476 der Momentive Performance Materials GmbH |
| **FR5** | BDP (Mischung aromatischer oligomerer Phosphate auf Basis von Bisphenol A-bis(diphenyl phosphat), CAS-Nr. 181028-79-5, erhältlich als Reofos^{®} BAPP der Chemtura Manufacturing UK, Ltd. |
| **FR6** | Phenoxycyclophosphazen, erhältlich als RABITLE^{®} FP-110 der Fushimi Pharmaceutical Co., Ltd. |
| **D1** | Hochkristallines Bornitrid-Pulver (Mix aus Plättchen und Agglomeraten) mit einem D50 von 16 µm (Laserbeugung nach ISO 13320:2009); BET-Oberfläche (nach ISO 4652:2012) von 8,0 m²/g |
| **D2** | Synthetisches, gefälltes Bariumsulfat mit einem pH-Wert von 5-7 und einer Dichte von 4,4 g/mL, CAS-Nr. 7727-43-7, "Blanc Fixe"-Qualität |
| **D3** | CaSO₄ CAS-Nr. 7778-18-9, erhältlich über Sigma-Aldrich Chemie GmbH |
| **E1** | Pigment TiO₂ (beschlichtetes Titandioxid), CAS-Nr. 13463-67-7, erhältlich als Kronos^{®} 2230 der Kronos Titan GmbH |

### Prüfmethoden

Die Bestimmung der Schmelze-Volumenfließrate (MVR) erfolgte nach ISO 1133-1:2012-03 bei einer Prüftemperatur von 300 °C, Masse 1,2 kg mit dem Gerät Zwick 4106 der Firma Zwick Roell. Dabei steht die Abkürzung MVR für die Anfangs-Schmelze-Volumenfließrate (nach 4 Minuten Vorwärmzeit), die Abkürzung IMVR für die Schmelze-Volumenfließrate nach 19 min.

Die Bestimmung der Scherviskosität (Schmelzeviskosität) bei 300°C erfolgte in Anlehnung an ISO 11443:2014-04 mit dem Gerät Visco-Robo 45.00 der Fa. Göttfert.

Die Schlagzähigkeit nach Charpy wurde nach ISO 179/1eU:2010 an einseitig angespritzten Prüfstäben der Dimension 80 mm x 10 mm x 4 mm bei 23 °C gemessen.

Die Vicat-Erweichungstemperatur VST/B50 als Maß für die Wärmeformbeständigkeit wurde gemäß ISO 306:2013 an Prüfkörpern der Abmessung 80 mm x 10 mm x 4 mm mit einer Stempellast von 50 N und einer Aufheizgeschwindigkeit von 50°C/h mit dem Gerät Coesfeld Eco 2920 der Firma Coesfeld Materialtest bestimmt.

Die Wärmeleitfähigkeit wurde an spritzgegossenen Prüfkörpern mit den Abmaßen 60 x 60 x 2 mm³ gemäß ASTM E 1461 (Nano Flash Methode) bestimmt.

Das Brandverhalten wurde nach UL 94V an Stäben der Abmessung 127 mm x 12,7 mm x "in der Tabelle angegebene mm" gemessen.

Der UL5V Test wurde an Platten der Abmessung 150 mm x 105mm x 2,0 mm durchgeführt.

### Herstellung der Zusammensetzungen

Die Herstellung der Formmassen erfolgte durch Schmelzemischung bzw. Schmelzecompoundierung auf einem Doppelschneckenextruder bzw. einem Co-Kneter bei einer Schmelzetemperatur von 260-310°C. Besonders bevorzugt wurde für die Schmelzemischung ein Co-Kneter verwendet und die Temperatur der Schmelze auf maximal 300°C begrenzt.

Die Komponenten B wurden dabei erst später zu den bereits aufgeschmolzenen oder in der Schmelze dispergierten Komponenten A und C gegeben. Die Dosierung von C erfolgte zeitgleich oder unmittelbar nach dem Aufschmelzen der Komponente A. Die Komponenten FR, D und E konnten an beliebiger Stelle zugegeben werden. Bevorzugt erfolgte die Zugabe von FR und E zeitgleich mit oder unmittelbar nach der Zugabe von C. Bevorzugt erfolgte die Zugabe der Komponenten D vor oder zeitgleich mit der Zugabe von B. Die Prüfkörper wurden jeweils durch Spritzguss bei einer Massetemperatur von 280°C - 300°C und einer Werkzeugtemperatur von 85 - 95 °C hergestellt.

### Ergebnisse

Die nachfolgenden Überlegungen geben die erhaltenen Ergebnisse von erfindungsgemäßen Zusammensetzungen und Vergleichsbeispielen wieder.

Die Vergleichsbeispiele V1 bis V10 zeigen, dass übliche Flammschutzmittelkombinationen aus FR1-FR4 in einer in WO 2018/037037 beschriebenen Rezeptur keinen ausreichenden Flammschutz bieten: sowohl der Test UL94V in 1,5 - 1,0 mm als auch der Test UL94 5V in 2,0 mm werden nicht bestanden. Dies gilt auch, wenn ein Polycarbonat mit höherem mittleren Molekulargewicht (A2) eingesetzt wird (V2, V4, V6, V8, V10).

Wird die Menge an B1 auf 25 Gew.-% reduziert, kann der UL94V Test in 1,5 mm bestanden werden, sofern 0,8% FR1 und 0,2% FR2 eingesetzt werden (V11). Jedoch wird kein 5VA im Test UL94 5V in 2,0 mm erreicht (V11).

Dies kann erst durch Zugabe einer entsprechenden Menge an D2 erreicht werden (1, 2, 3, 4), wobei 2,5% der Komponente D2 noch nicht ausreichen, um ein sicheres 5VA zu erzielen (V12). Die Gesamtmenge an Füllstoffen (Summe der Komponenten B und D) in den Beispielen 1, 2 und 4 entspricht bzw. übersteigt dabei die Menge an Füllstoff in V1 bis V 10.

Die Zugabe von D3 führt im Vergleich zur Zugabe von D2 nicht zu einer Verbesserung der Ergebnisse des UL94 5V-Tests (V13, V14, V15). Ebenso führen Kombinationen aus D2 und D3 nicht zu einer Verbesserung des Ergebnisses im UL94 5V-Test (V20, V21).

Ebenso wirkt sich die Zugabe der Komponente D1 nicht positiv auf das Ergebnis des UL94 5V-Tests aus (V16, V17, V18, V19). Auch die Kombination aus D1 und D2 führt nicht zu einer Verbesserung des Ergebnisses im UL94 5V-Test (V22).

Die Versuche 2 und 4 zeigen, dass auch eine höhere Menge an Weißpigment E1 in der Rezeptur zulässig ist, ohne wesentliche Eigenschaften der Formmasse zu verlieren.

Auch Co-Polycarbonate wie z.B. ein Co-Polycarbonat aus Bisphenol-A und 4,4'-Dihydroxybiphenyl (DOD) können mit der erfindungsgemäßen Kombination aus FR1, FR2 und D2 entsprechend flammgeschützt werden (Beispiel 5).

Wird die Gesamtfüllstoffmenge (Summe der Komponenten B und D) wie in V27 weiter erhöht, ist die Zugabe von 0,8% FR1 und 0,2% FR2 nicht mehr ausreichend, um ein V0 im UL94V-Test mindestens 1,5 mm und ein 5VA im UL94 5V-Test bei 2,0 mm zu erreichen.

Hier wird bevorzugt ein phosphorhaltiges Flammschutzmittel wie FR5 und/oder FR6 anstelle von FR2 zugesetzt.

Die Beispiele V23, V24 und V29 zeigen, dass bei alleinigem Einsatz von FR1 und FR5 in hohen Konzentrationen in Abwesenheit der Komponente D2 kein 5VA im UL94 5V-Test bei 2,0 mm erzielt werden kann. Zudem sinkt die Wärmeformbeständigkeit der Formmassen gemessen an der Vicat-Erweichungstemperatur VST/B50 gemäß ISO 306 bei Zugabe von mehr als 7% FR5 so stark ab, dass sich die Formmassen nicht mehr für Einsatztemperaturen über 115 °C eignen (V23, V24 gegen V29).

Ein V0 im UL94V-Test bei 1,5 mm und ein 5VA im UL94 5V-Test bei 2,0 mm werden nur erreicht, wenn die Menge an FR5 auf weniger als 7% abgesenkt wird und zusätzlich Komponente D2 zugesetzt wird (Beispiel 6).

Eine zu hohe Menge an FR5 wirkt sich dabei erneut negativ auf die Wärmeformbeständigkeit der Formmassen, die Ergebnisse des Charpy Schlagversuchs gemäß ISO 179 / 1eU sowie das Ergebnis des UL94 5V-Tests aus (V28).

Besonders gute Eigenschaftskombinationen können erzielt werden, wenn eine Kombination aus FR1 und FR6 mit Komponente D2 für den Flammschutz verwendet werden (Beispiele 7 und 8). Die Wärmeformbeständigkeit (VST/B50 gemäß ISO 306) in den Beispielen liegt oberhalb von 115 °C und es werden ein V0 im UL94V-Test bei 1,5, 1,2 und sogar 1,0 mm sowie ein 5VA im UL94 5V-Test bei 2,0 mm sicher erreicht. Zudem liegt das Ergebnis des Charpy-Schlagversuchs gemäß ISO 179 / 1eU oberhalb von 20 kJ/m², was ein ausgezeichnetes Ergebnis für Formmassen mit einem entsprechenden Gesamtfüllstoffgehalt darstellt.

Beispiele 8 und V30 zeigen, dass die Zugabe der Komponente D2 notwendig ist, um das 5VA im UL94 5V Test bei 2,0 mm zu erreichen.

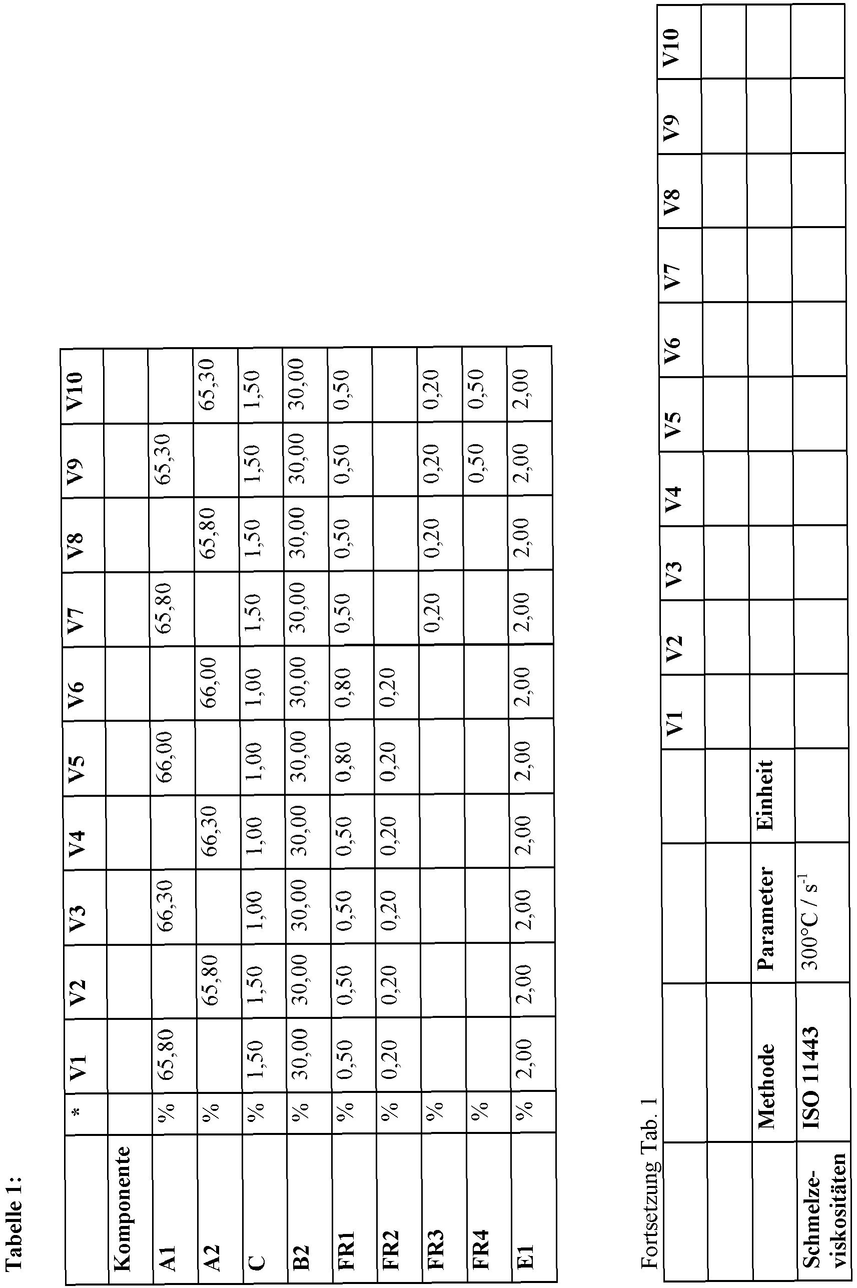

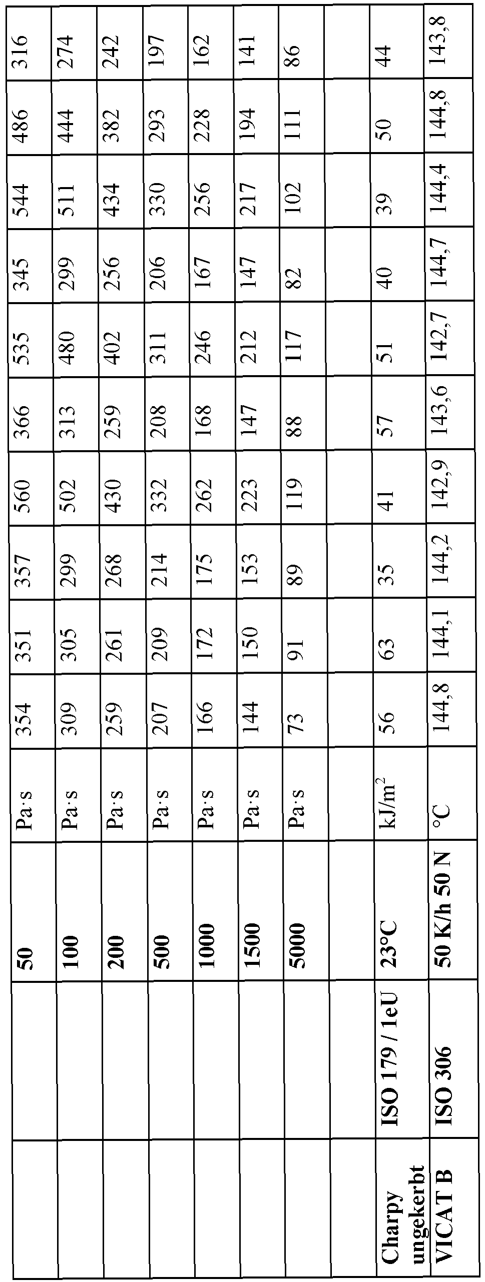

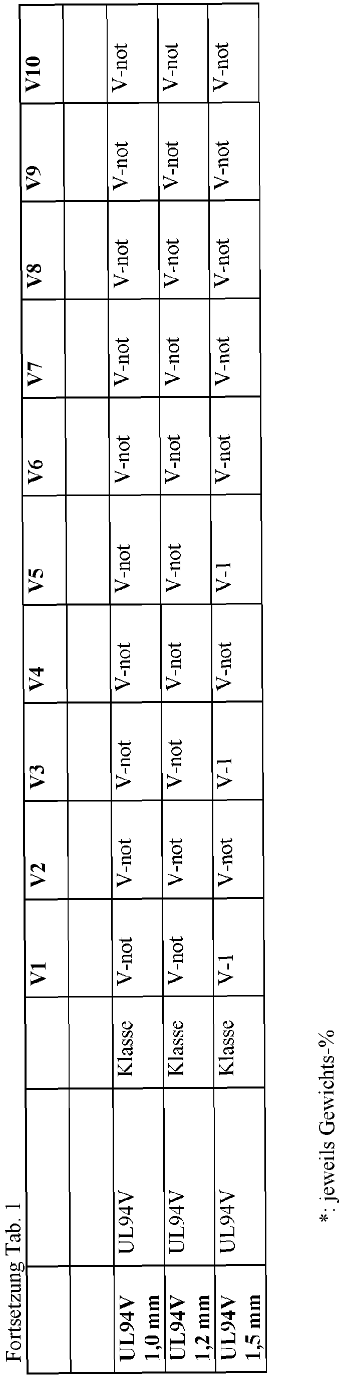

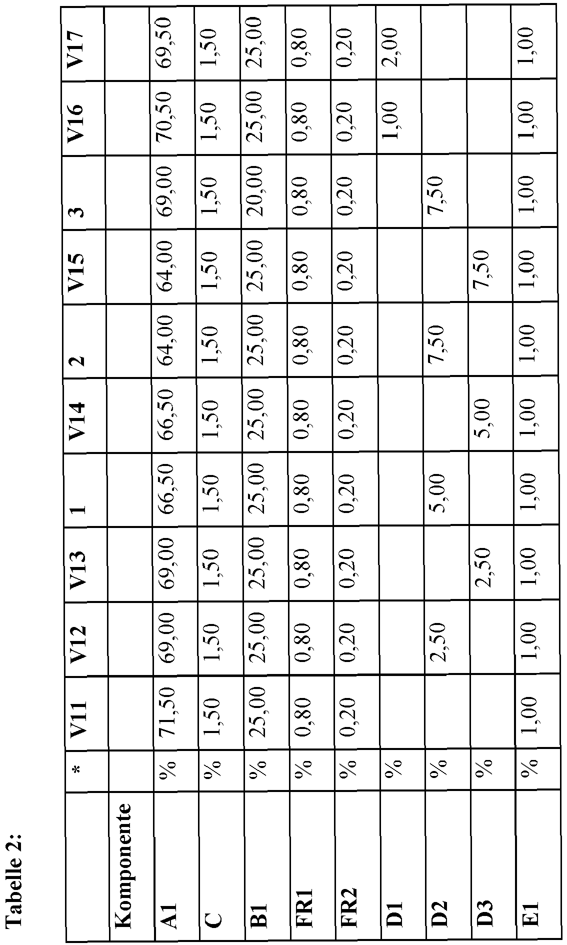

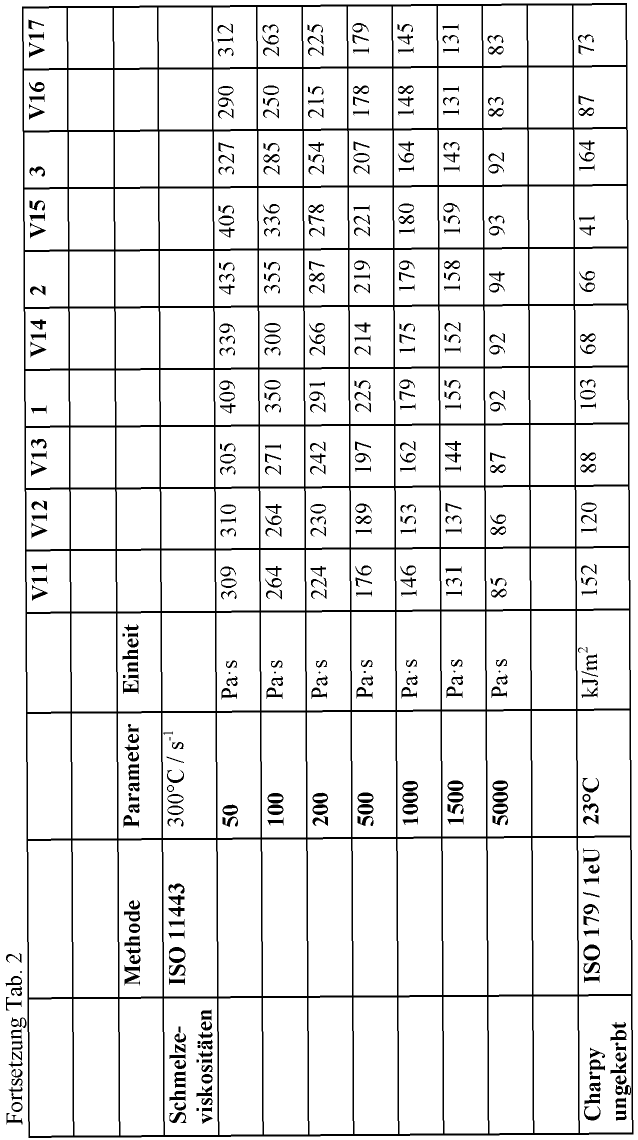

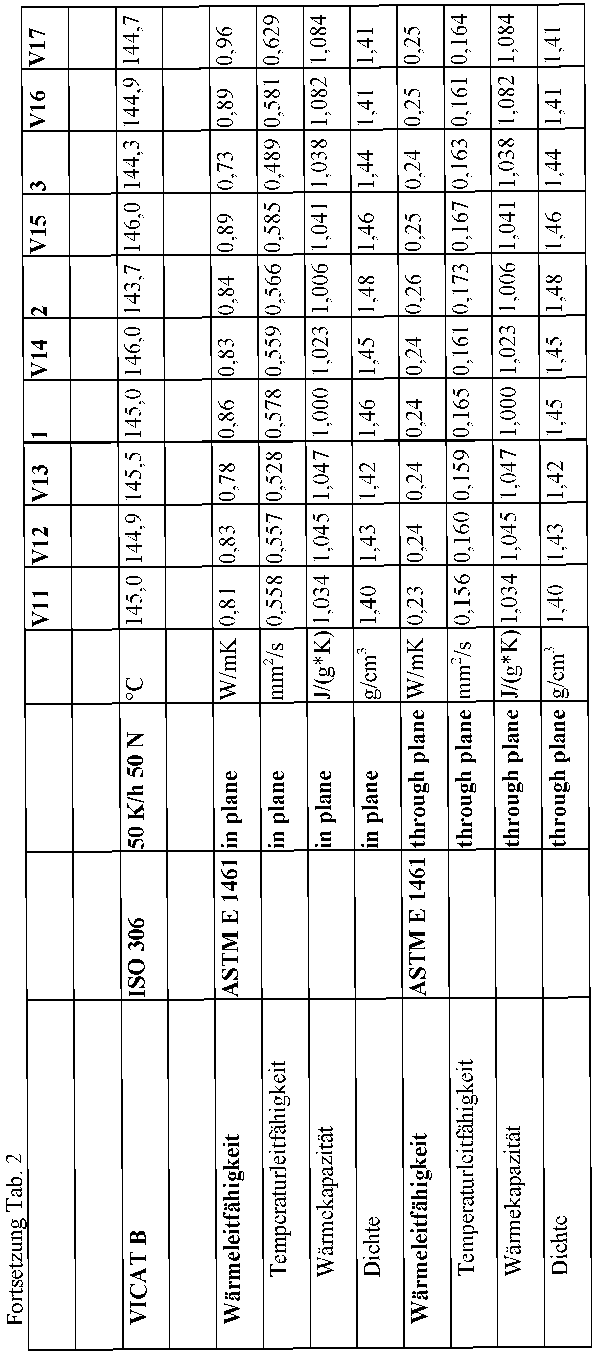

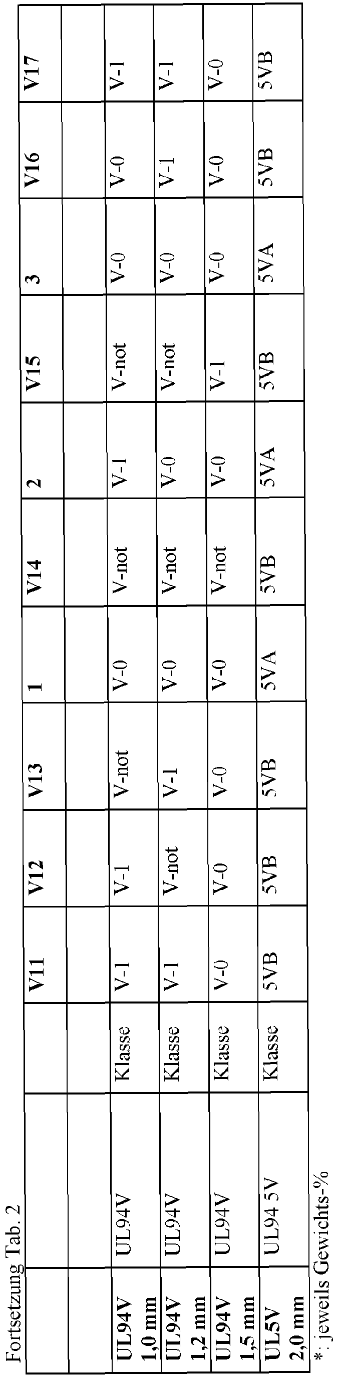

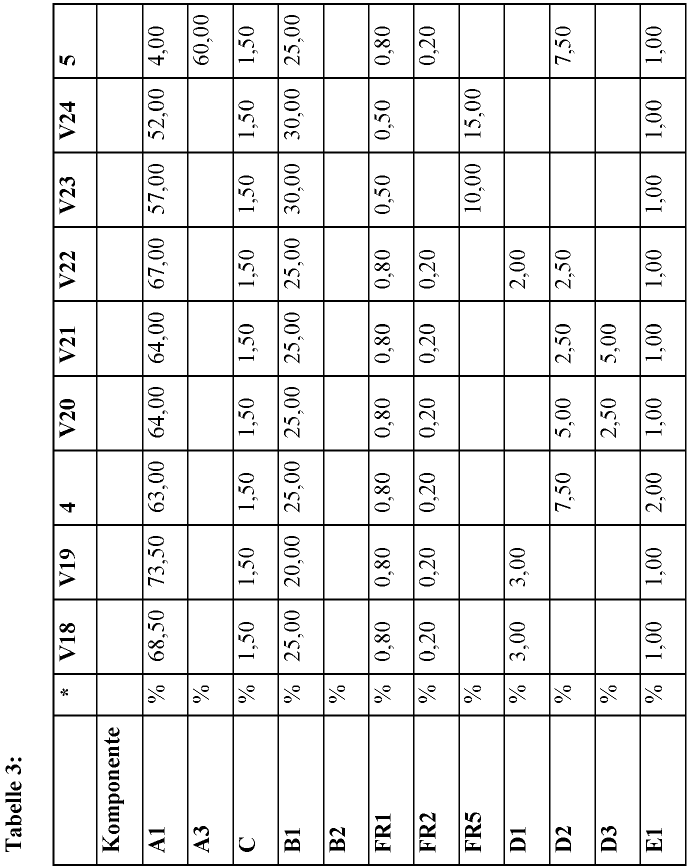

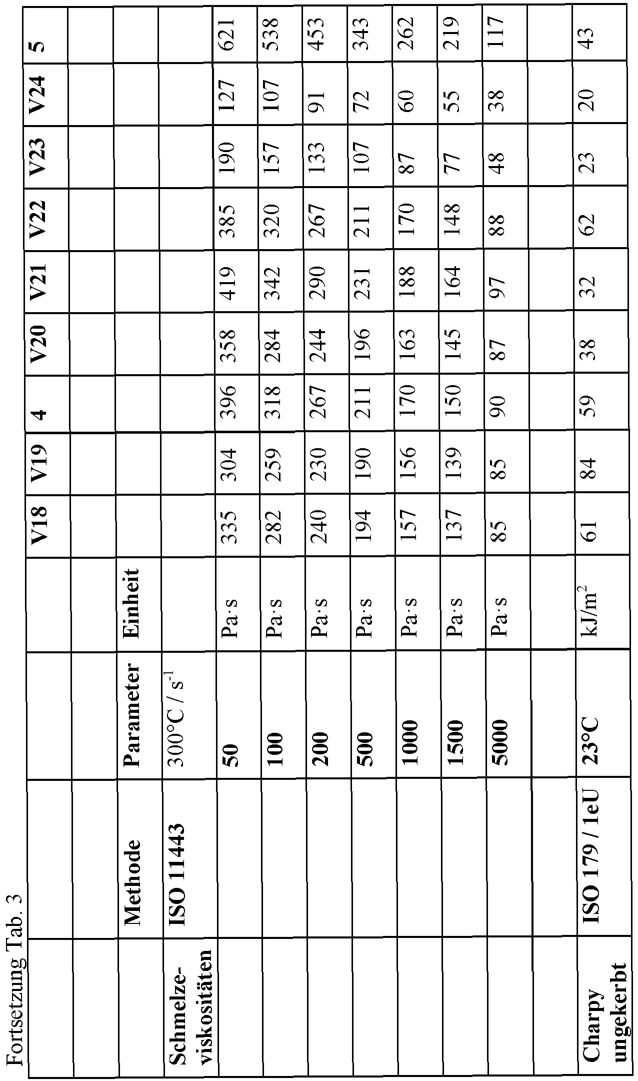

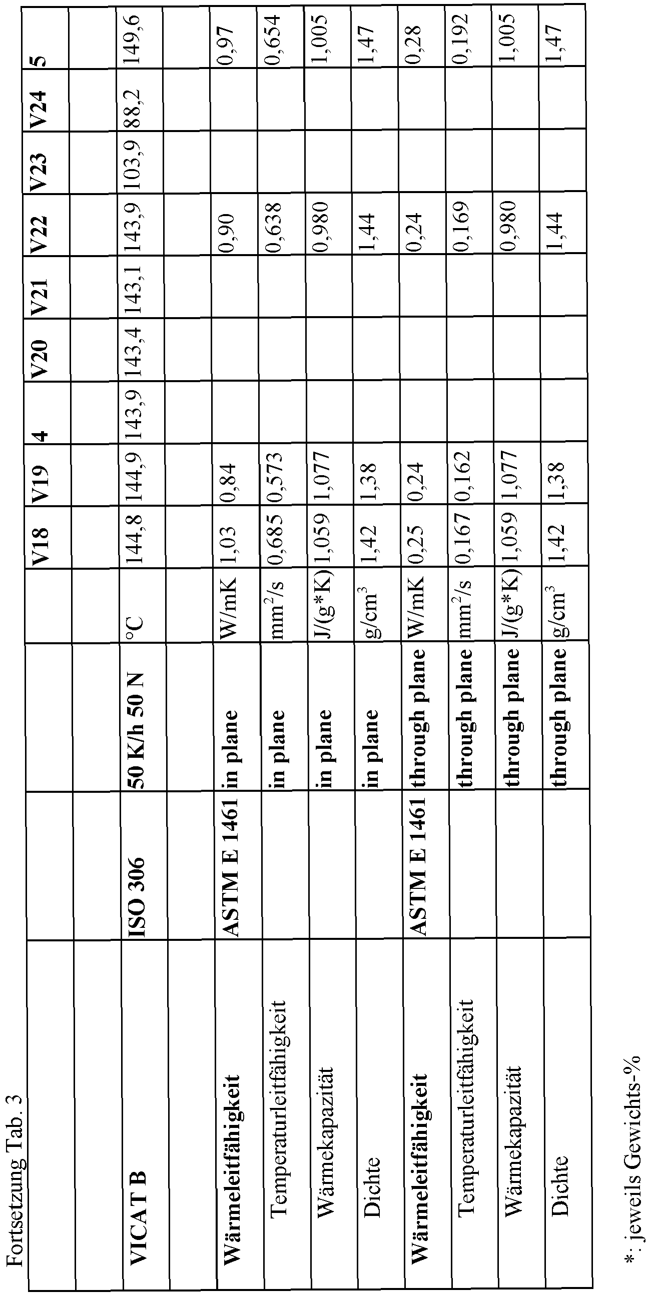

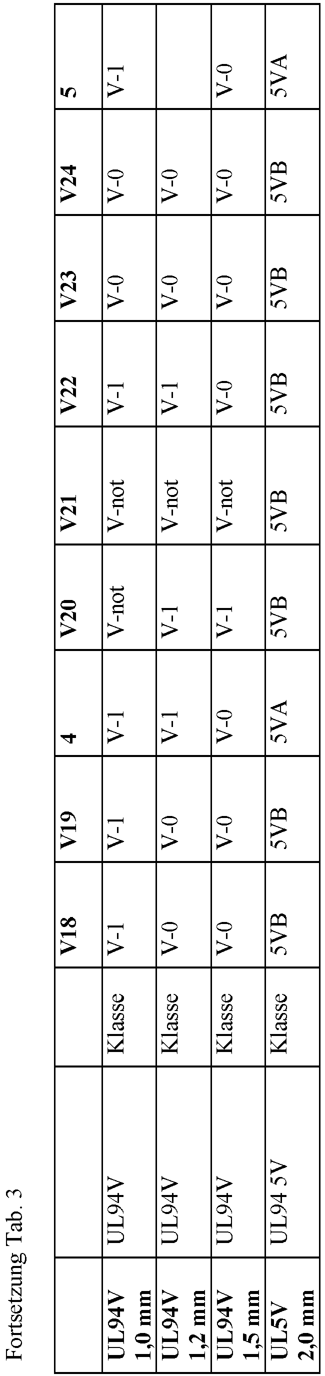

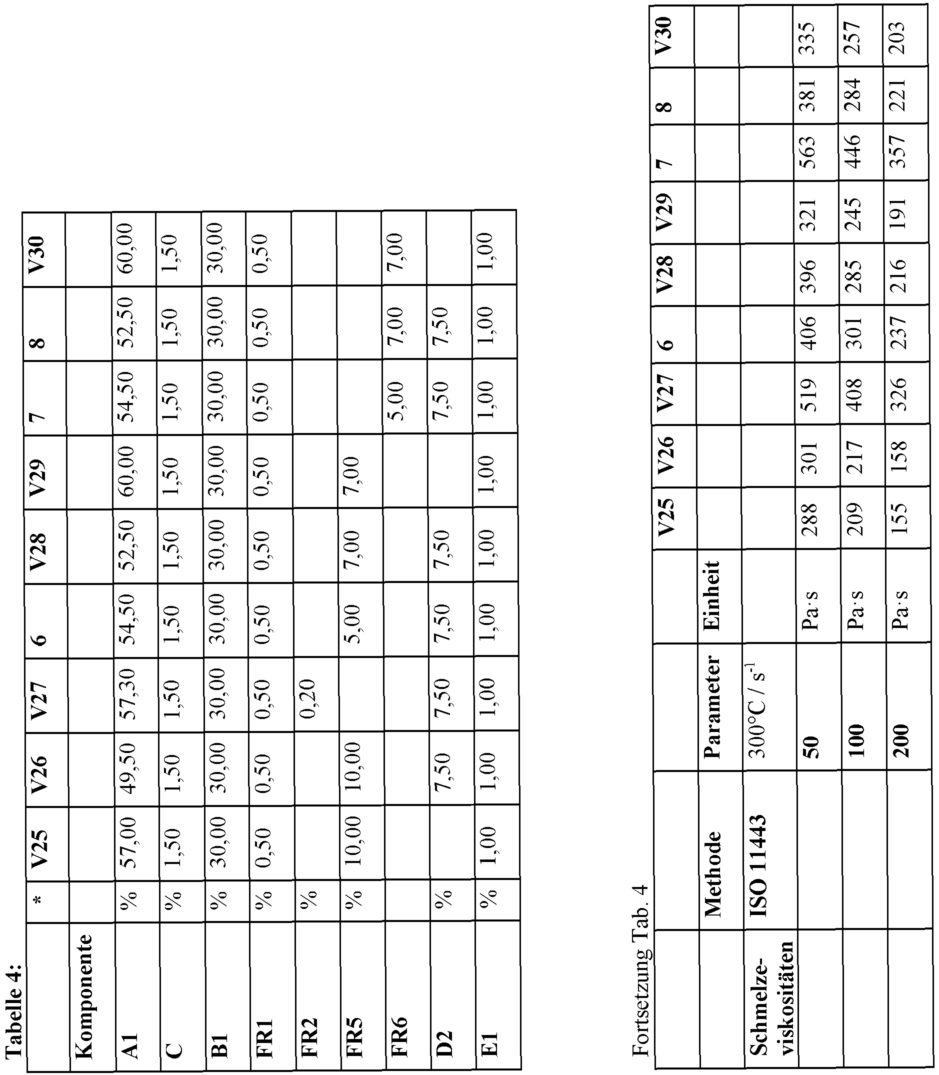

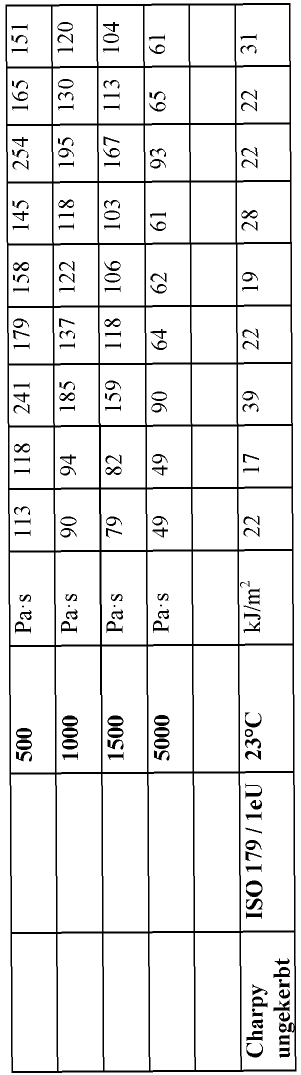

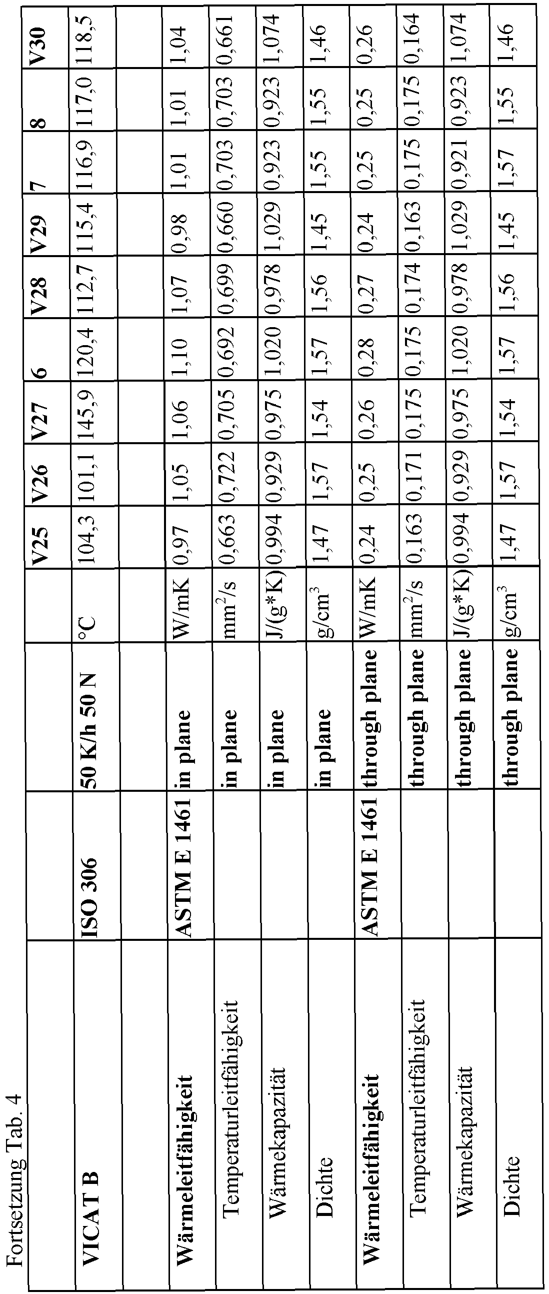

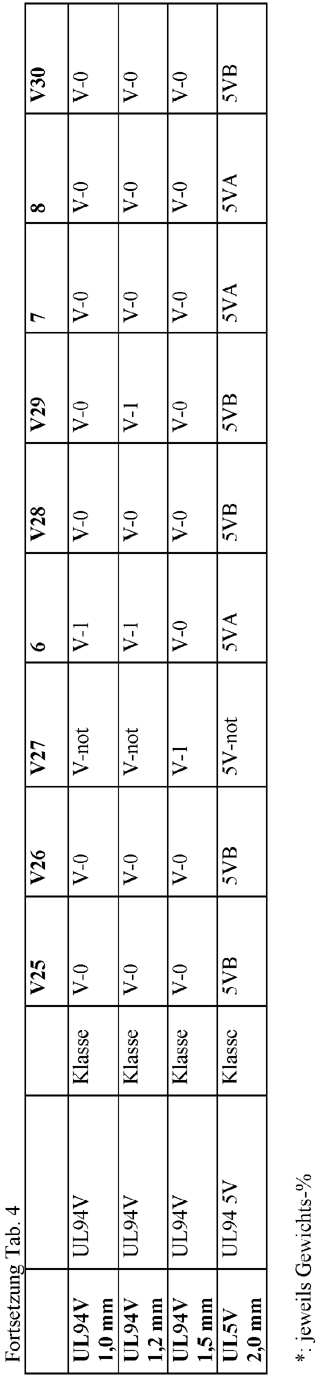

## Patentansprüche

1. Thermoplastische Zusammensetzung, umfassend:
A) wenigstens ein aromatisches Polycarbonat;
B) Talk;
C) wenigstens ein anhydridmodifiziertes alpha-Olefin-Polymer mit einer Säurezahl von ≥ 30 mg KOH/g und einem mittleren Molekulargewicht Mw von ≥ 4000 bis ≤ 40000 g/mol,
wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005;
FR) wenigstens ein organisches Flammschutzmittel ausgewählt aus: Fluoropolymere enthaltenden Antitropfmitteln, fluorierten Sulfonsäuresalzen, organischen Phosphorsäureestern, Phosphazenen oder Mischungen aus wenigstens zwei der vorgenannten Mittel;
D) wenigstens eine von Talk verschiedene anorganische Verbindung;
**dadurch gekennzeichnet, dass**
die Zusammensetzung Bariumsulfat in einer Menge von ≥ 3 Gewichts-%, bezogen auf das Gesamtgewicht der Zusammensetzung, enthält;
die Zusammensetzung von Bariumsulfat verschiedene Erdalkalimetallsulfate in einer Menge von ≥ 0 Gewichts-% bis ≤ 25 Gewichts-%, bezogen auf das Gesamtgewicht der in der Zusammensetzung vorliegenden Erdalkalimetallsulfate, enthält;
die Zusammensetzung organische Phosphorsäureester in einer Menge von ≥ 0 Gewichts-% bis ≤ 7,5 Gewichts-%, bezogen auf das Gesamtgewicht der Zusammensetzung, enthält und
die Zusammensetzung ≥ 0,5 Gewichts-%, bezogen auf das Gesamtgewicht der Zusammensetzung, an Fluoropolymeren enthaltenden Antitropfmitteln enthält,
wobei für den Fall, dass die Zusammensetzung ≥ 0,1 Gewichts-%, bezogen auf das Gesamtgewicht der Zusammensetzung, an fluorierten Sulfonsäuresalzen enthält, der Gehalt an Fluropolymeren enthaltenden Antitropfmitteln ≥ 0,7 Gewichts-%, bezogen auf das Gesamtgewicht der Zusammensetzung, beträgt.

2. Zusammensetzung gemäß Anspruch 1, wobei die Zusammensetzung ≥ 3 Gewichts-%, bezogen auf das Gesamtgewicht der Zusammensetzung, an organischen Phosphorsäureestern enthält.

3. Zusammensetzung gemäß Anspruch 1 oder 2, wobei die Zusammensetzung ≥ 3 Gewichts-%, bezogen auf das Gesamtgewicht der Zusammensetzung, an linearen und/oder cyclischen Phosphazenen enthält.

4. Zusammensetzung gemäß einem der vorhergehenden Ansprüche, wobei die Zusammensetzung:
≥ 0 Gewichts-% bis ≤ 1 Gewichts-%, bezogen auf das Gesamtgewicht der Zusammensetzung, an oligomeren organischen Siloxanen enthält und/oder
≥ 0 Gewichts-% bis ≤ 1 Gewichts-%, bezogen auf das Gesamtgewicht der Zusammensetzung, an halogenfreien organischen Sulfonen und/oder halogenfreien organischen Sulfonaten enthält und/oder
≥ 0 Gewichts-% bis ≤ 1 Gewichts-%, bezogen auf das Gesamtgewicht der Zusammensetzung, an Bornitrid enthält.

5. Zusammensetzung gemäß einem der vorhergehenden Ansprüche, wobei die Zusammensetzung wenigstens ein Polycarbonat oder Co-Polycarbonat umfassend auf Bisphenol A basierende Einheiten enthält.

6. Zusammensetzung gemäß einem der vorhergehenden Ansprüche, wobei das anhydridmodifizierte alpha-Olefin-Polymer C) ≥ 90,0 bis ≤ 98,0 Gewichts-% alpha-Olefin-Polymer und ≥ 2,0 bis ≤ 10,0 Gewichts-% Anhydrid umfasst, wobei die Gewichts-%-Angaben sich auf das Gesamtgewicht des anhydridmodifizierten alpha-Olefin-Polymers beziehen und ihre Summe ≤ 100 Gewichts-% beträgt.

7. Thermoplastische Zusammensetzung gemäß einem der vorhergehenden Ansprüche, wobei der Talk einen D50-Wert der Partikelgrößenverteilung, bestimmt mittels Sedimentationsanalyse, von ≥ 0,5 bis ≤ 10 µm aufweist.

8. Thermoplastische Zusammensetzung gemäß einem der vorhergehenden Ansprüche, umfassend:
A) ≥ 50 bis ≤ 75 Gewichts-% aromatisches Polycarbonat;
B) ≥ 15 bis ≤ 35 Gewichts-% Talk;
C) ≥ 0,5 bis ≤ 3 Gewichts-% anhydridmodifiziertes alpha-Olefin-Polymer mit einer Säurezahl von ≥ 30 mg KOH/g und einem mittleren Molekulargewicht Mw von ≥ 4000 bis ≤ 40000 g/mol,
wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005;
FR) ≥ 0,7 bis ≤ 0,9 Gewichts-% Fluoropolymer enthaltendes Antitropfmittel in Kombination mit ≥ 0,1 bis ≤ 0,3 Gewichts-% fluoriertes Sulfonsäuresalz;
oder
≥ 0,4 bis ≤ 0,6 Gewichts-% Fluoropolymer enthaltendes Antitropfmittel in Kombination mit ≥ 3 bis ≤ 5 Gewichts-% organischem Phosphorsäureester;
oder
≥ 0,4 bis ≤ 0,6 Gewichts-% Fluoropolymer enthaltendes Antitropfmittel in Kombination mit ≥ 3 bis ≤ 10 Gewichts-% lineares oder cyclisches Phosphazen;
D) ≥ 3 Gewichts-% bis ≤ 10 Gewichts-% Bariumsulfat;
E) ≥ 0 Gewichts-% bis ≤ 3 Gewichts-% Titandioxid;
wobei die Gewichts-%-Angaben sich auf das Gesamtgewicht der Zusammensetzung beziehen und ihre Summe ≤ 100 Gewichts-% beträgt.

9. Zusammensetzung gemäß einem der vorhergehenden Ansprüche, umfassend:
A) ≥ 52 bis ≤ 55 Gewichts-% aromatisches Polycarbonat mit einem mittleren Molekulargewicht M_{w} von 23.000 g/mol bis 25.000, einer Erweichungstemperatur (VST/B 120 nach ISO 306:2014-3) von 145 °C bis 150 °C und einer Schmelze-Volumenfließrate (MVR) nach ISO 1133:2012-03 von 18,0 cm³/(10 min) bis 20,0 cm³/(10 min) bei 300 °C und 1,2 kg Belastung;
B) ≥ 28 bis ≤ 30 Gewichts-% Talk mit einem D50-Wert der Partikelgrößenverteilung (Sedimentationsanalyse) von ≥ 2 µm bis ≤ 2,5 µm;
C) ≥ 1 bis ≤ 2 Gewichts-% anhydridmodifiziertes alpha-Olefin-Polymer mit einer Säurezahl von ≥ 75 bis ≤80 mg KOH/g und einem mittleren Molekulargewicht MW von ≥ 20,000 bis ≤ 21,000 g/mol,
wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005;
FR) ≥ 0,4 bis ≤ 0,6 Gewichts-% Fluoropolymer enthaltendes Antitropfmittel und ≥ 5 bis ≤ 8 Gewichts-% cyclisches Phosphazen;
D) ≥ 7 Gewichts-% bis ≤ 8 Gewichts-% Bariumsulfat;
E) ≥ 0 Gewichts-% bis ≤ 1,2 Gewichts-% Titandioxid,
wobei die Gewichts-%-Angaben sich auf das Gesamtgewicht der Zusammensetzung beziehen und ihre Summe ≤ 100 Gewichts-% beträgt.

10. Zusammensetzung gemäß einem der vorhergehenden Ansprüche mit wenigstens zwei der folgenden Eigenschaften:
a) die Schmelzeviskosität (ISO 11443:2014-04, 300 °C, 1000 s⁻¹) beträgt ≥ 100 Pa·s bis ≤ 300 Pa s;
b) die Charpy-Schlagzähigkeit (ungekerbt, ISO 179/1eU, 23 °C) beträgt ≥ 20 kJ/m²;
c) die Vicat B-Erweichungstemperatur (VST/B50, ISO 306, 50 K/h, 50 N) beträgt ≥ 115 °C;
d) die Wärmeleitfähigkeit (ASTM E 1461, in plane) beträgt ≥ 0,68 W/m K;
e) die Wärmeleitfähigkeit (ASTM E 1461, through plane) beträgt ≥ 0,2 W/m K;
f) die Einstufung im Brandtest UL94V (1,5 mm Wandstärke) beträgt V-0;
g) die Einstufung im Brandtest UL94-5V (2,0 mm Wandstärke) beträgt VA.

11. Verfahren zur Herstellung einer Zusammensetzung gemäß einem der Ansprüche 1 bis 10, umfassend das Vermischen der Komponenten A), B) C), FR) und D),
**dadurch gekennzeichnet, dass**
als Talk B) unbeschlichteter Talk eingesetzt wird,
die Mengen von B) und C) vor dem Vermischen so aufeinander abgestimmt sind, dass pro 10 Gewichtsteile unbeschlichtetem Talk ≥ 0,10 bis ≤ 1,4 Gewichtsteile der Komponente C eingesetzt werden,
wobei das Vermischen der Komponenten A), B), FR) und D) einen Mischschritt der Komponenten A) und B) bei einer Temperatur oberhalb der Schmelztemperatur des aromatischen Polycarbonats A) umfasst und
wobei Komponente C) der Mischung hinzugegeben wird, wenn die Komponenten A) und B) zusammen aufgeschmolzen werden.

12. Verfahren gemäß Anspruch 11, wobei das Vermischen in einem Ko-Kneter erfolgt.

13. Formteil, umfassend eine thermoplastisch verarbeitete Zusammensetzung gemäß einem der Ansprüche 1 bis 10.

14. Formteil gemäß Anspruch 13, wobei das Formteil ein Batteriegehäuse, ein 2-Komponenten-Kühlkörper mit einer elektrisch leitfähigen Schicht oder ein Elektronikgehäuse ist.

## Claims

1. Thermoplastic composition, comprising:
A) at least one aromatic polycarbonate;
B) talc;
C)at least one anhydride-modified alpha-olefin polymer having an acid number of ≥ 30 mg KOH/g and an average molecular weight M_{w} of ≥ 4000 to ≤ 40 000 g/mol,
wherein the average molecular weight M_{w} is determined by gel permeation chromatography in ortho-dichlorobenzene at 150°C with polystyrene calibration and the acid number is determined by potentiometric titration with alcoholic potassium hydroxide solution according to DIN ISO 17025:2005;
FR) at least one organic flame retardant selected from: fluoropolymer-containing anti-drip agents, fluorinated sulfonic acid salts, organic phosphoric acid esters, phosphazenes or mixtures of at least two of the abovementioned agents;
D)at least one inorganic compound distinct from talc;
**characterized in that**
the composition contains barium sulfate in an amount of ≥ 3% by weight based on the total weight of the composition;
the composition contains alkaline earth metal sulfates distinct from barium sulfate in an amount of ≥ 0% by weight to ≤ 25% by weight based on the total weight of the alkaline earth metal sulfates present in the composition;
the composition contains organic phosphoric acid esters in an amount of ≥ 0% by weight to ≤ 7.5% by weight based on the total weight of the composition and
the composition contains ≥ 0.5% by weight based on the total weight of the composition of fluoropolymer-containing anti-drip agents,
wherein in the case where the composition contains ≥ 0.1% by weight based on the total weight of the composition of fluorinated sulfonic acid salts, the content of fluoropolymer-containing anti-drip agents is ≥ 0.7% by weight based on the total weight of the composition.

2. Composition according to Claim 1, wherein the composition contains ≥ 3% by weight based on the total weight of the composition of organic phosphoric acid esters.

3. Composition according to Claim 1 or 2, wherein the composition contains ≥ 3% by weight based on the total weight of the composition of linear and/or cyclic phosphazenes.

4. Composition according to any of the preceding claims, wherein the composition contains
≥ 0% by weight to ≤ 1% by weight based on the total weight of the composition of oligomeric organic siloxanes and/or
≥ 0% by weight to ≤ 1% by weight based on the total weight of the composition of halogen-free organic sulfones and/or halogen-free organic sulfonates and/or
≥ 0% by weight to ≤ 1% by weight based on the total weight of the composition of boron nitride.

5. Composition according to any of the preceding claims, wherein the composition contains at least one polycarbonate or copolycarbonate comprising units based on bisphenol A.

6. Composition according to any of the preceding claims, wherein the anhydride-modified alpha-olefin polymer C) comprises ≥ 90.0% to ≤ 98.0% by weight of alpha-olefin polymer and ≥ 2.0% to ≤ 10.0% by weight of anhydride, wherein the reported % by weight values are based on the total weight of the anhydride-modified alpha-olefin polymer and sum to ≤ 100% by weight.

7. Thermoplastic composition according to any of the preceding claims, wherein the talc has a D50 value for the particle size distribution determined by sedimentation analysis of ≥ 0.5 to ≤ 10 µm.

8. Thermoplastic composition according to any of the preceding claims, comprising:
A) ≥ 50% to ≤ 75% by weight of aromatic polycarbonate;
B) ≥ 15% to ≤ 35% by weight of talc;
C) ≥ 0.5% to ≤ 3% by weight of anhydride-modified alpha-olefin polymer having an acid number of ≥ 30 mg KOH/g and an average molecular weight M_{w} of ≥ 4000 to ≤ 40 000 g/mol,
wherein the average molecular weight M_{w} is determined by gel permeation chromatography in ortho-dichlorobenzene at 150°C with polystyrene calibration and the acid number is determined by potentiometric titration with alcoholic potassium hydroxide solution according to DIN ISO 17025:2005;
FR) ≥ 0.7% to ≤ 0.9% by weight of fluoropolymer-containing anti-drip agent in combination with ≥ 0.1% to ≤ 0.3% by weight of fluorinated sulfonic acid salt;
or
≥ 0.4% to ≤ 0.6% by weight of fluoropolymer-containing anti-drip agent in combination with ≥ 3% to ≤ 5% by weight of organic phosphoric acid ester;
or
≥ 0.4% to ≤ 0.6% by weight of fluoropolymer-containing anti-drip agent in combination with ≥ 3% to ≤ 10% by weight of linear or cyclic phosphazene;
D) ≥ 3% by weight to ≤ 10% by weight of barium sulfate;
E) ≥ 0% by weight to ≤ 3% by weight of titanium dioxide; wherein the reported % by weight values are based on the total weight of the composition and sum to ≤ 100% by weight.

9. Composition according to any of the preceding claims, comprising:
A) ≥ 52% to ≤ 55% by weight of aromatic polycarbonate having an average molecular weight M_{w} of 23 000 g/mol to 25 000, a softening temperature (VST/B 120 according to ISO 306:2014-3) of 145°C to 150°C and a melt-volume flow rate (MVR) according to ISO 1133:2012-03 of 18.0 cm³/(10 min) to 20.0 cm³/(10 min) at 300°C and a 1.2 kg load;
B) ≥ 28% to ≤ 30% by weight of talc having a D50 value for the particle size distribution (sedimentation analysis) of ≥ 2 µm to ≤ 2.5 µm;
C) ≥ 1% to ≤ 2% by weight of anhydride-modified alpha-olefin polymer having an acid number of ≥ 75 to ≤ 80 mg KOH/g and an average molecular weight MW of ≥ 20 000 to ≤ 21 000 g/mol,
wherein the average molecular weight M_{w} is determined by gel permeation chromatography in ortho-dichlorobenzene at 150°C with polystyrene calibration and the acid number is determined by potentiometric titration with alcoholic potassium hydroxide solution according to DIN ISO 17025:2005;
FR) ≥ 0.4% to ≤ 0.6% by weight of fluoropolymer-containing anti-drip agent and ≥ 5% to ≤ 8% by weight of cyclic phosphazene;
D) ≥ 7% by weight to ≤ 8% by weight of barium sulfate;
E) ≥ 0% by weight to ≤ 1.2% by weight of titanium dioxide;
wherein the reported % by weight values are based on the total weight of the composition and sum to ≤ 100% by weight.

10. Composition according to any of the preceding claims having at least two of the following properties:
a) the melt viscosity (ISO 11443:2014-04, 300°C, 1000 s⁻¹) is ≥ 100 Pa·s to ≤ 300 Pa·s;
b) the Charpy impact strength (unnotched, ISO 179/1eU, 23°C) is ≥ 20 kJ/m²;
c) the Vicat B softening temperature (VST/B50, ISO 306, 50 K/h, 50 N) is ≥ 115°C;
d) the thermal conductivity (ASTM E 1461, in plane) is ≥ 0.68 W/m K;
e) the thermal conductivity (ASTM E 1461, through plane) is ≥ 0.2 W/m K;
f) the rating in the UL94V fire test (1.5 mm wall thickness) is V-0;
g) the rating in the UL94-5V fire test (2.0 mm wall thickness) is VA.

11. Process for producing a composition according to any of Claims 1 to 10, comprising mixing the components A), B), C), FR) and D),
**characterized in that**
the talc B) employed is unsized talc,
before mixing the amounts of B) and C) are matched to one another such that per 10 parts by weight of unsized talc ≥ 0.10 to ≤ 1.4 parts by weight of component C are employed,
wherein the mixing of components A), B), FR) and D) comprises a mixing step of components A) and B) at a temperature above the melting temperature of the aromatic polycarbonate A) and
wherein component C) is added to the mixture when components A) and B) are jointly melted.

12. Process according to Claim 11, wherein the mixing is carried out in a co-kneader.

13. Molding comprising a thermoplastically processed composition according to any of Claims 1 to 10.

14. Molding according to Claim 13, wherein the molding is a battery housing, a 2-component cooling body having an electrically conductive layer or an electronics housing.

## Revendications

1. Composition thermoplastique, comprenant:
A) au moins un polycarbonate aromatique;
B) du talc;
C) au moins un polymère alpha-oléfinique modifié par anhydride présentant un indice d'acide ≥ 30 mg de KOH/g et un poids moléculaire moyen Mw de ≥ 4000 à ≤ 40.000 g/mole,
le poids moléculaire moyen Mw étant déterminé par chromatographie par perméation de gel dans de l'ortho-dichlorobenzène à 150°C avec un étalonnage au polystyrène et l'indice d'acide étant déterminé par titrage potentiométrique avec une solution alcoolique d'hydroxyde de potassium selon la norme DIN ISO 17025:2005;
FR) au moins un agent ignifuge organique choisi parmi : les agents antigoutte contenant des fluoropolymères, les sels fluorés de l'acide sulfonique, les esters organiques de l'acide phosphorique, les phosphazènes ou les mélanges d'au moins deux des agents susmentionnés;
D) au moins un composé inorganique différent du talc; **caractérisée en ce que**
- la composition contient du sulfate de baryum en une quantité ≥ 3% en poids, par rapport au poids total de la composition;
- la composition contient des sulfates de métal alcalino-terreux différents du sulfate de baryum en une quantité de ≥ 0% en poids à ≤ 25% en poids, par rapport au poids total des sulfates de métal alcalino-terreux se trouvant dans la composition ;
- la composition contient des esters organiques de l'acide phosphorique en une quantité de ≥ 0% en poids à ≤ 7,5% en poids, par rapport au poids total de la composition et
- la composition contient ≥ 0,5% en poids, par rapport au poids total de la composition, d'agents antigoutte contenant des fluoropolymères,
où, pour le cas où la composition contient ≥ 0,1% en poids, par rapport au poids total de la composition, de sels fluorés de l'acide sulfonique, la teneur en agents antigoutte contenant des fluoropolymères est ≥ 0,7% en poids, par rapport au poids total de la composition.

2. Composition selon la revendication 1, la composition contenant ≥ 3% en poids, par rapport au poids total de la composition, d'esters organiques de l'acide phosphorique.

3. Composition selon la revendication 1 ou 2, la composition contenant ≥ 3% en poids, par rapport au poids total de la composition, de phosphazènes linéaires et/ou cycliques.

4. Composition selon l'une quelconque des revendications précédentes, la composition contenant :
- ≥ 0% en poids à ≤ 1% en poids, par rapport au poids total de la composition, de siloxanes organiques oligomères et/ou
- ≥ 0% en poids à ≤ 1% en poids, par rapport au poids total de la composition, de sulfones organiques exemptes d'halogène et/ou de sulfonates organiques exempts d'halogène et/ou
- ≥ 0% en poids à ≤ 1% en poids, par rapport au poids total de la composition, de nitrure de bore.

5. Composition selon l'une quelconque des revendications précédentes, la composition contenant au moins un polycarbonate ou copolycarbonate comprenant des motifs à base de bisphénol A.

6. Composition selon l'une quelconque des revendications précédentes, le polymère alpha-oléfinique modifié par anhydride C) comprenant ≥ 90,0 à ≤ 98,0% en poids de polymère alpha-oléfinique et ≥ 2,0 à ≤ 10,0% en poids d'anhydride, les indications de % en poids se rapportant au poids total du polymère alpha-oléfinique modifié par anhydride et leur somme étant ≤ 100% en poids.

7. Composition thermoplastique selon l'une quelconque des revendications précédentes, le talc présentant une valeur D50 de la distribution des grosseurs de particule, déterminée par analyse par sédimentation, de ≥ 0,5 à ≤ 10 µm.

8. Composition thermoplastique selon l'une quelconque des revendications précédentes, comprenant
A) ≥ 50 à ≤ 75% en poids de polycarbonate aromatique ;
B) ≥ 15 à ≤ 35% en poids de talc ;
C) ≥ 0,5 à ≤ 3% en poids de polymère alpha-oléfinique modifié par anhydride présentant un indice d'acide ≥ 30 mg de KOH/g et un poids moléculaire moyen Mw de ≥ 4000 à ≤ 40.000 g/mole,
le poids moléculaire moyen Mw étant déterminé par chromatographie par perméation de gel dans de l'ortho-dichlorobenzène à 150°C avec un étalonnage au polystyrène et l'indice d'acide étant déterminé par titrage potentiométrique avec une solution alcoolique d'hydroxyde de potassium selon la norme DIN ISO 17025:2005;
FR) ≥ 0,7 à ≤ 0,9% en poids d'agent antigoutte contenant des fluoropolymères en combinaison avec ≥ 0,1% en poids à ≤ 0,3% en poids de sel fluoré de l'acide sulfonique; ou
≥ 0,4 à ≤ 0,6% en poids d'agent antigoutte contenant des fluoropolymères en combinaison avec ≥ 3% en poids à ≤ 5% en poids d'ester organique de l'acide phosphorique; ou
≥ 0,4 à ≤ 0,6% en poids d'agent antigoutte contenant des fluoropolymères en combinaison avec ≥ 3% en poids à ≤ 10% en poids de phosphazène linéaire ou cyclique ;
D) ≥ 3% en poids à ≤ 10% en poids de sulfate de baryum ;
E) ≥ 0% en poids à ≤ 3% en poids de dioxyde de titane ; les indications de % en poids se rapportant au poids total de la composition et leur somme étant ≤ 100% en poids.

9. Composition thermoplastique selon l'une quelconque des revendications précédentes, comprenant :
A) ≥ 52 à ≤ 55% en poids de polycarbonate aromatique présentant un poids moléculaire moyen Mw de 23.000 g/mole à 25.000 g/mole, une température de ramollissement (VST/B 120 selon la norme ISO 306:2014-3) de 145°C à 150°C et un indice volumique de fluidité à chaud (MVR) selon la norme ISO 1133:2012-03 de 18,0 cm³/(10 min) à 20,0 cm³/(10 min) à 300°C et sous une charge de 1,2 kg ;
B) ≥ 28 à ≤ 30% en poids de talc présentant une valeur D50 de la distribution des grosseurs de particule (analyse par sédimentation) de ≥ 2 µm à ≤ 2,5 µm ;
C) ≥ 1 à ≤ 2% en poids de polymère alpha-oléfinique modifié par anhydride présentant un indice d'acide de ≥ 75 à ≤ 80 mg KOH/g et un poids moléculaire moyen Mw de ≥ 20.000 à ≤ 21.000 g/mole,
le poids moléculaire moyen Mw étant déterminé par chromatographie par perméation de gel dans de l'ortho-dichlorobenzène à 150°C avec un étalonnage au polystyrène et l'indice d'acide étant déterminé par titrage potentiométrique avec une solution alcoolique d'hydroxyde de potassium selon la norme DIN ISO 17025:2005;
FR) ≥ 0,4 à ≤ 0,6% en poids d'agent antigoutte contenant des fluoropolymères et ≥ 5% en poids à ≤ 8% en poids de phosphazène cyclique;
D) ≥ 7% en poids à ≤ 8% en poids de sulfate de baryum;
E) ≥ 0% en poids à ≤ 1,2% en poids de dioxyde de titane;
les indications de % en poids se rapportant au poids total de la composition et leur somme étant ≤ 100% en poids.

10. Composition selon l'une quelconque des revendications précédentes, présentant au moins deux des propriétés suivantes :
a) la viscosité en masse fondue (ISO 11443:2014-04, 300°C, 1000 s⁻¹) est de ≥ 100 Pa.s à ≤ 300 Pa.s;
b) la résilience Charpy (éprouvette non entaillée, ISO 179/1eU, 23°C) est ≥ 20 kJ/m²;
c) la température de ramollissement Vicat B (VST/B50, ISO 306, 50 K/h, 50 N) est ≥ 115°C;
d) la conductibilité thermique (ASTM E 1461, dans le plan) est ≥ 0,68 W/m K;
e) la conductibilité thermique (ASTM E 1461, à travers le plan) est ≥ 0,2 W/m K;
f) la classification dans le test au feu UL94V (épaisseur de paroi 1,5 mm) est V-0;
g) la classification dans le test au feu UL94-5V (épaisseur de paroi 2,0 mm) est VA.

11. Procédé pour la préparation d'une composition selon l'une quelconque des revendications 1 à 10, comprenant le mélange des composants A), B), C), FR) et D),
**caractérisé**
**en ce qu'**on utilise, comme talc B), du talc non enrobé, les quantités B) et C) avant le mélange sont adaptées l'une à l'autre de manière telle qu'on utilise, par 10 parties en poids de talc non enrobé, ≥ 0,10 à ≤ 1,4 partie en poids de composant C,
le mélange des composants A), B), FR) et D) comprenant une étape de mélange des composants A) et B) à une température supérieure à la température de fusion du polycarbonate aromatique A) et
le composant C) étant ajouté au mélange lorsque les composants A) et B) ont été fondus conjointement.

12. Procédé selon la revendication 11, le mélange ayant lieu dans un comalaxeur.

13. Pièce moulée, comprenant une composition transformée par voie thermoplastique selon l'une quelconque des revendications 1 à 10.

14. Pièce moulée selon la revendication 13, la pièce moulée étant un boîtier de batterie, un corps de refroidissement à deux composants présentant une couche électriquement conductrice ou un boîtier électronique.
